# EUROPEAN PATENT APPLICATION

(11) **EP 2 960 612 A1**
(43) Date of publication of application: **30.12.2015**
(21) Application number: 14754060.3
(22) Date of filing: 24.02.2014
(51) Int. Cl.: F28F 3/08, B60H 1/08, B60H 1/32, F28D 1/053, F28D 20/00

(54) **HEAT EXCHANGER AND VEHICLE AIR CONDITIONING DEVICE**

(30) Priority: 25.02.2013 JP 2013034635; 18.03.2013 JP 2013055616; 30.04.2013 JP 2013095302; 08.05.2013 JP 2013098794
(71) Applicant: Valeo Systemes Thermiques, 78321 Le Mesnil Saint Denis Cédex (FR)
(72) Inventor: SAITO, Ryoichi, Kumagaya-shi Saitama 360-0193 (JP); TSUJI, Teruaki, Kumagaya-shi Saitama 360-0193 (JP); HAYASHI, Naoto, Kumagaya-shi Saitama 360-0193 (JP)
(74) Representative: Metz, Gaëlle
(86) International application number: PCT/JP2014/054283
(87) International publication number: WO 2014/129621

(57) **Abstract**

An object of the invention is to provide a heat exchanger which charges an appropriate amount of a heat storage material into a part of a charging space. A heat exchanger for vehicle air conditioning according to the invention comprising: a laminated body which is obtained by alternately laminating tubes and outer fins, each tube has a structure obtained by bonding a first closing plate and a second closing plate to each other or a structure obtained by sandwiching at least one intermediate plate between the first closing plate and the second closing plate, both ends of the tube in the longitudinal direction are provided with a tank portion, two or more tubes each having a cooling medium passage therein include storage portions which store a heat storage material therein, the laminated body includes a plurality of charging spaces S1 and S2 which include storage portions and does not communicate with each other, and the charging spaces S1 and S2 include a first division space which charges a heat storage material A and a second division space which does not charge the heat storage material.

## Description

### Technical Field

The invention relates to a heat exchanger for a vehicle air conditioning, and particularly, to a heat exchanger having a heat storage material.

The invention relates to a vehicle air conditioning device, and particularly, to a vehicle air conditioning device with a heat exchanger having a heat storage material.

### Background Art

In a vehicle that automatically stops an engine so as to stop while waiting for the light to change, a compressor of a refrigerating cycle also stops when the engine stops, and hence the temperature of an evaporator rises. As a result, a problem arises in that the temperature of air blowing into a vehicle interior rises and the comfortability is degraded. In order to solve this problem, there is disclosed a heat storing heat exchanger that includes a heat medium passage which causes a heat medium to flow therethrough and a heat storage material chamber which receives a heat storage material therein are integrated by a double tube structure, and a passage of a fluid which exchanges heat with the heat medium is formed outside the tube of the double tube structure (for example, see Patent Literature 1). In the heat exchanger disclosed in Patent Literature 1, a cold storage material is cooled in advance by the cooling capability of an evaporator during the operation of an engine and a compressor, and the cooling capability of air is maintained by the latent heat of the cold storage material during the stop of the engine, thereby suppressing degradation in cooling feeling. Further, in Patent Literature 1, paraffin having a melting point of about 6°C is exemplified as a cold storage material. Then, a change in phase of the cold storage material is used.

There is disclosed a heat exchanger including a tube structure including a plurality of tubes which circulates the heat transfer fluid and a reservoir for a heat storage material contacting the tubes so that heat is exchanged between the heat storage material and the heat transfer fluid, and the tube structure improves the heat exchange efficiency between the heat storage material and the heat transfer fluid, the cooling efficiency for an outer fin by the heat transfer fluid, and the cooling efficiency for the outer fin by the heat storage material (for example, see Patent Literature 2).

Incidentally, there is disclosed a technique of a heat exchanger used for a cooling operation and a warming operation by employing a structure of changing a cooling medium flow direction for a cooling/dehumidifying operation and a cooling medium flow direction for a warming operation (for example, see Patent Literature 3).

In a heat exchanger, temperature distribution is formed in response to the conditions such as the amount of a cooling medium flowing therethrough, the speed of air passing therethrough, or the temperature of air passing therethrough. For example, the heat exchanger has a tendency that the temperature of an area having a relatively large amount of a cooling medium passing therethrough becomes higher than the temperature of an area having a relatively small amount of a cooling medium passing therethrough. In order to solve the non-uniform temperature distribution of the evaporator, an evaporator is disclosed which examines a cooling medium flow direction (for example, see Patent Literature 4).

An evaporator is disclosed in which a flat hollow tube is provided with a plurality of cooling medium passages lined up in the width direction and a plurality of cold storage material enclosing passages lined up in the width direction and a cold storage material such as water-based or paraffin-based having a freezing point adjusted to about 3 to 10°C is enclosed in the cold storage material enclosing passages so that the cold storage material is charged into all cold storage material enclosing passages up to the upper ends thereof (for example, see Patent Literature 5).

### Citation List

### Patent Literature

Patent Literature 1: JP 2000-205777 A
Patent Literature 2: JP 2008-522133 W (for example, Fig. 20)
Patent Literature 3: JP 2000-343923 A
Patent Literature 4: WO 2000/040914 A
Patent Literature 5: JP 2011-133126 A

### Summary of Invention

### Technical Problem

Since the heat storing heat exchanger disclosed in Patent Literature 1 has a structure in which the cold storage material chamber surrounds the heat medium passages, a problem arises in that an outer fin is not efficiently cooled by the cooling medium. An efficient cooling operation may be performed by using a tube structure disclosed in Patent Literature 2. However, Patent Literature 1 and Patent Literature 2 both disclose a structure including the heat storage material, but the appropriate heat storage material amount and the heat storage material adjusting means are not disclosed. There is a tendency that the heat capacity decreases as the amount of the heat storage material decreases and the heat capacity increases as the amount of the heat storage material increases. For this reason, the heat exchanger has a tendency that the ability of maintaining the temperature of the air conditioning air by using the latent heat of the heat storage material increases as the amount of the heat storage material increases in an idle stop state. However, when the heat storage material is charged excessively, a problem arises in that the warming/cooling operation is not promptly performed and the weight and the cost of the heat exchanger increase.

Patent Literature 1 and Patent Literature 2 both disclose a structure having the heat storage material, but a means for obtaining uniform temperature distribution is not disclosed.

In an evaporator of Patent Literature 4, a problem arises in that temperature distribution is not uniform, for example, when the amount of a cooling medium discharged from a variable displacement compressor is small or speed distribution of air passing through the heat exchanger is not uniform.

Further, Patent Literature 1 discloses the heat exchanger that uses the phase transition of the heat storage material, but one kind of heat storage material is used. Even in Patent Literature 5, one kind of cold storage material is used. When one kind of heat storage material is used, the heat storage effect obtained by the latent heat is exhibited only in any one of the cooling operation and the warming operation, for example, even when a structure of using the heat storage material is provided in the heat exchanger used for the cooling/warming operation as shown in Patent Literature 3.

Incidentally, the temperature of the heat exchanger is not uniform when the heat exchanger is operated as the evaporator. For example, in a case where the compressor of the refrigerating cycle is the variable displacement compressor, there is a tendency that the evaporator is easily cooled so that the temperature of the evaporator decreases when the amount of the cooling medium discharged from the compressor is large, and there is a tendency that the evaporator is not easily cooled so that the temperature of the evaporator increases when the amount of the cooling medium discharged from the compressor is small. Further, in the vehicle which is able to temporarily stop the engine in a stop state, there is a tendency that the temperature of the evaporator decreases when the compressor is continuously operated due to the continuous long travel time, while there is a tendency that the temperature of the evaporator increases when the operation time of the engine is short due to the frequent idle stop in a traffic jam, for example. Further, in the system that saves power by arbitrarily changing the operation rate of the compressor by the use of, for example, the variable thermostat, the temperature of the evaporator changes in response to the set temperature of the thermostat.

Further, the temperature of the heat exchanger is not uniform when the heat exchanger serves as the heater. For example, in a case where the compressor of the refrigerating cycle is the variable displacement compressor, there is a tendency that the heater is easily warmed so that the temperature of the heater increases when the amount of the cooling medium discharged from the compressor is large, while there is a tendency that the heater is not easily warmed so that the temperature of the heater decreases when the amount of the cooling medium discharged from the compressor is small. Further, in the vehicle which is able to temporarily stop the engine, there is a tendency that the temperature of the heater increases when the compressor is continuously operated due to the continuous long travel time, while there is a tendency that the temperature of the heater decreases due to the intermittent operation of the compressor when the operation time of the engine is short due to the frequent idle stop in a traffic jam, for example. Further, in the system that saves power by arbitrarily changing the operation rate of the compressor by the use of, for example, the variable thermostat, the temperature of the heater changes in response to the set temperature of the thermostat.

An object of the invention is to provide a heat exchanger which charges an appropriate amount of a heat storage material into a part of a charging space.

An object of the invention is to provide a vehicle air conditioning device with a heat exchanger which solves non-uniform temperature distribution without examining a cooling medium flow direction.

An object of the invention is to provide a heat exchanger which exhibits a heat storage material by latent heat in both a cooling operation and a warming operation. Further, another object of the invention is to provide a heat exchanger which exhibits a heat storage effect by latent heat in response to a change in temperature caused when the heat exchanger serves as an evaporator or a heater.

### Solution to Problem

A heat exchanger for vehicle air conditioning according to the invention comprising: a laminated body which is obtained by alternately laminating tubes and outer fins, wherein each tube has a structure obtained by bonding a first closing plate and a second closing plate to each other or a structure obtained by sandwiching at least one intermediate plate between the first closing plate and the second closing plate, wherein one end portion of the tube in the longitudinal direction is provided with one tank portion, wherein the other end portion of the tube in the longitudinal direction is provided with the other tank portion, wherein the tube includes a cooling medium passage which causes one tank portion and the other tank portion to communicate with each other, wherein two or more tubes include storage portions which store a heat storage material and do not communicate with the cooling medium passage, wherein the laminated body includes a plurality of charging spaces which includes the storage portions and does not communicate with one another, and wherein the charging spaces include a first division space which charges the heat storage material and a second division space which does not charge the heat storage material.

In the heat exchanger according to the invention, it is preferable that the tube include at least one of a first tube which includes a charging portion provided at one end portion and the other end portion so as to communicate with the storage portion and to communicate with both adjacent laminated tubes, a second tube which includes a charging portion provided at any one of one end portion and the other end portion so as to communicate with the storage portion and to communicate with both adjacent laminated tubes and includes a communication portion provided at an end portion opposite to the end portion having the charging portion so as not to communicate with the storage portion and to communicate with both adjacent laminated tubes, and a third tube which includes a first closing portion provided at one end portion and the other end portion so as to communicate with the storage portion and not to communicate with only one of both adjacent laminated tubes.

In the heat exchanger according to the invention, it is preferable that the tubes include the first tube and the third tube. The storage portion of the first division space and the storage portion of the second division space may be alternately disposed.

In the heat exchanger according to the invention, it is preferable that the tubes include the first tube, the second tube, and the third tube. The storage portion of the first division space and the storage portion of the second division space may be arbitrarily disposed.

In the heat exchanger according to the invention, it is preferable that the tubes are the second tube. The storage portion of the first division space and the storage portion of the second division space may be arbitrarily disposed.

In the heat exchanger according to the invention, it is preferable that the tubes further include at least one of a fourth tube which includes a communication portion provided at one end portion and the other end portion so as not to communicate with the storage portion and to communicate with both adjacent laminated tubes and in which the storage portion becomes a hermetic space so that the heat storage material is not charged therein or the storage portion is not provided, and a fifth tube which includes a second closing portion provided at one end portion and the other end portion so as not to communicate with the storage portion and not to communicate with only one of both adjacent laminated tubes and in which the storage portion becomes a hermetic space so that the heat storage material is not charged therein or the storage portion is not provided.

In the heat exchanger according to the invention, it is preferable that the tubes include the first tube, the second tube, and the fifth tube. Two kinds or more of heat storage materials may be disposed and the storage portion of the second division space may be arbitrarily disposed.

In the heat exchanger according to the invention, it is preferable that the tubes include the second tube and the fourth tube. Two kinds of heat storage materials may be disposed and the storage portion of the second division space may be arbitrarily disposed.

In the heat exchanger according to the invention, it is preferable that the tubes include the first tube and the fourth tube. The storage portion of the second division space may be arbitrarily disposed.

In the heat exchanger according to the invention, it is preferable that the tubes include the first tube, the fourth tube, and the fifth tube. Two kinds of heat storage materials may be disposed and the storage portion of the second division space may be arbitrarily disposed.

In the heat exchanger according to the invention, it is preferable that the tubes include the first tube, the third tube, and the fourth tube. Two kinds of heat storage materials may be disposed and the storage portion of the second division space may be arbitrarily disposed.

In the heat exchanger according to the invention, it is preferable that the tubes include the second tube, the fourth tube, and the fifth tube. Two kinds or more of heat storage materials may be disposed and the storage portion of the second division space may be arbitrarily disposed.

A vehicle air conditioning device according to the invention comprising: an air stream generator and a heat exchanger connected to a refrigerating cycle inside a casing having an air passage formed therein, wherein the heat exchanger includes a laminated body which is obtained by alternately laminating tubes and outer fins, wherein each tube has a structure obtained by bonding a first closing plate and a second closing plate to each other or a structure obtained by sandwiching at least one intermediate plate between the first closing plate and the second closing plate, wherein one end portion of the tube in the longitudinal direction is provided with one tank portion, wherein the other end portion of the tube in the longitudinal direction is provided with the other tank portion, wherein the tube includes a cooling medium passage which causes the one tank portion and the other tank portion to communicate with each other, wherein two or more tubes include storage portions which store a heat storage material and do not communicate with the cooling medium passage, wherein the laminated body includes a plurality of charging spaces which includes the storage portions and does not communicate with one another, wherein the charging spaces include a first division space which charges the heat storage material and a second division space which does not charge the heat storage material, and wherein the first division space is relatively densely disposed in any one or both a readily frozen area and a readily heated area of the heat exchanger.

In the vehicle air conditioning device according to the invention, it is preferable that the tubes include at least one of a first tube which includes a charging portion provided at one end portion and the other end portion so as to communicate with the storage portion and to communicate with both adjacent laminated tubes, a second tube which includes a charging portion provided at any one of one end portion and the other end portion so as to communicate with the storage portion and to communicate with both adjacent laminated tubes and includes a communication portion provided at an end portion opposite to the end portion having the charging portion so as not to communicate with the storage portion and to communicate with both adjacent laminated tubes, and a third tube which includes a first closing portion provided at one end portion and the other end portion so as to communicate with the storage portion and not to communicate with only one of both adjacent laminated tubes.

In the vehicle air conditioning device according to the invention, it is preferable that the tubes include the first tube and the third tube. The storage portion of the first division space and the storage portion of the second division space may be alternately disposed.

In the vehicle air conditioning device according to the invention, it is preferable that the tubes include the first tube, the second tube, and the third tube. The storage portion of the first division space and the storage portion of the second division space may be arbitrarily disposed.

In the vehicle air conditioning device according to the invention, it is preferable that the tubes are the second tube. The storage portion of the first division space and the storage portion of the second division space may be arbitrarily disposed.

In the vehicle air conditioning device according to the invention, it is preferable that the tubes further include at least one of a fourth tube which includes a communication portion provided at one end portion and the other end portion so as not to communicate with the storage portion and to communicate with both adjacent laminated tubes and in which the storage portion becomes a hermetic space so that the heat storage material is not charged therein or the storage portion is not provided, and a fifth tube which includes a second closing portion provided at one end portion and the other end portion so as not to communicate with the storage portion and not to communicate with only one of both adjacent laminated tubes and in which the storage portion becomes a hermetic space so that the heat storage material is not charged therein or the storage portion is not provided.

In the vehicle air conditioning device according to the invention, it is preferable that the tubes include the first tube, the second tube, and the fifth tube. Two kinds or more of heat storage materials may be disposed and the storage portion of the second division space may be arbitrarily disposed.

In the vehicle air conditioning device according to the invention, it is preferable that the tubes include the second tube and the fourth tube. Two kinds of heat storage materials may be disposed and the storage portion of the second division space may be arbitrarily disposed.

In the vehicle air conditioning device according to the invention, it is preferable that the tubes include the first tube and the fourth tube. The storage portion of the second division space may be arbitrarily disposed.

In the vehicle air conditioning device according to the invention, it is preferable that the tubes include the first tube, the fourth tube, and the fifth tube. Two kinds of heat storage materials may be disposed and the storage portion of the second division space may be arbitrarily disposed.

In the vehicle air conditioning device according to the invention, it is preferable that the tubes include the first tube, the third tube, and the fourth tube. Two kinds of heat storage materials may be disposed and the storage portion of the second division space may be arbitrarily disposed.

In the vehicle air conditioning device according to the invention, it is preferable that the tubes include the second tube, the fourth tube, and the fifth tube. Two kinds or more of heat storage materials may be disposed and the storage portion of the second division space may be arbitrarily disposed.

A heat exchanger for vehicle air conditioning according to the invention comprising: a laminated body which is obtained by alternately laminating tubes and outer fins, wherein each tube has a structure obtained by bonding a first closing plate and a second closing plate to each other or a structure obtained by sandwiching at least one intermediate plate between the first closing plate and the second closing plate, wherein one end portion of the tube in the longitudinal direction is provided with one tank portion, wherein the other end portion of the tube in the longitudinal direction is provided with the other tank portion, wherein the tube includes a cooling medium passage which causes the one tank portion and the other tank portion to communicate with each other, wherein two or more tubes include storage portions which store a heat storage material and do not communicate with the cooling medium passage, wherein the laminated body includes a plurality of charging spaces which includes the storage portions and does not communicate with one another, and wherein the charging spaces include a first division space which charges a first heat storage material and a second division space which charges a second heat storage material having a phase transition temperature different from the first heat storage material.

The heat exchanger according to the invention is preferably a heat exchanger serving as an evaporator and a heater used in a heat pump cycle, the first heat storage material is preferably a heat storage material of which the phase transition occurs at a temperature higher than a temperature range in which the heat exchanger is controlled as the evaporator, and the second heat storage material is preferably a heat storage material of which the phase transition occurs at a temperature lower than a temperature range in which the heat exchanger is controlled as the heater. In both the cooling operation and the warming operation, the heat storage effect caused by the latent heat may be exhibited.

In the heat exchanger according to the invention, it is preferable that the tubes include at least one of one tube which includes a charging portion provided at one end portion and the other end portion so as to communicate with the storage portion and to communicate with both adjacent laminated tubes, a second tube which includes a charging portion provided at any one of one end portion and the other end portion so as to communicate with the storage portion and to communicate with both adjacent laminated tubes and includes a communication portion provided at an end portion opposite to the end portion having the charging portion so as not to communicate with the storage portion and to communicate with both adjacent laminated tubes, and a third tube which includes a first closing portion provided at one end portion and the other end portion so as to communicate with the storage portion and not to communicate with only one of both adjacent laminated tubes.

In the heat exchanger according to the invention, it is preferable that the tubes include the first tube and the third tube. Two kinds of heat storage materials may be disposed. Further, the storage portion of the charging space charging the heat storage material and the storage portion of the charging space not charging the heat storage material may be alternately disposed.

In the heat exchanger according to the invention, it is preferable that the tubes include the first tube, the second tube, and the third tube. Two kinds or more of heat storage materials may be disposed. Further, the storage portion of the charging space charging the heat storage material and the storage portion of the charging space not charging the heat storage material may be arbitrarily disposed.

In the heat exchanger according to the invention, it is preferable that the tubes are the second tube. Two kinds of heat storage materials may be disposed. Further, the storage portion of the charging space charging the heat storage material and the storage portion of the charging space not charging the heat storage material may be arbitrarily disposed.

In the heat exchanger according to the invention, it is preferable that the tubes further include at least one of a fourth tube which includes a communication portion provided at one end portion and the other end portion so as not to communicate with the storage portion and to communicate with both adjacent laminated tubes and in which the storage portion becomes a hermetic space so that the heat storage material is not charged therein or the storage portion is not provided, and a fifth tube which includes a second closing portion provided at one end portion and the other end portion so as not to communicate with the storage portion and not to communicate with only one of both adjacent laminated tubes and in which the storage portion becomes a hermetic space so that the heat storage material is not charged therein or the storage portion is not provided.

In the heat exchanger according to the invention, it is preferable that the tubes include the first tube, the second tube, and the fifth tube. Two kinds or more of heat storage materials may be disposed and a portion in which the heat storage material is not disposed may be formed.

In the heat exchanger according to the invention, it is preferable that the tubes include the second tube and the fourth tube. Two kinds of heat storage materials may be disposed and a portion in which the heat storage material is not disposed may be formed.

In the heat exchanger according to the invention, it is preferable that the tubes include the first tube, the fourth tube, and the fifth tube. Two kinds of heat storage materials may be disposed and a portion in which the heat storage material is not disposed may be formed.

In the heat exchanger according to the invention, it is preferable that the tubes include the first tube, the third tube, and the fourth tube. Two kinds of heat storage materials may be disposed and a portion in which the heat storage material is not disposed may be formed.

In the heat exchanger according to the invention, it is preferable that the tubes include the second tube, the fourth tube, and the fifth tube. Two kinds or more of heat storage materials may be disposed and a portion in which the heat storage material is not disposed may be formed.

### Advantageous Effects of Invention

The invention may provide a heat exchanger which charges an appropriate amount of a heat storage material into a part of a charging space.

The invention may provide a vehicle air conditioning device with a heat exchanger which solves non-uniform temperature distribution without examining a cooling medium flow direction.

The invention may provide a heat exchanger which exhibits a heat storage effect by latent heat in both a cooling operation and a warming operation. Further, the invention may provide a heat exchanger which exhibits a heat storage effect by latent heat in response to a change in temperature caused when the heat exchanger serves as an evaporator or a heater.

### Brief Description of Drawings

Fig. 1 is a schematic configuration perspective view illustrating an example of a heat exchanger according to an embodiment.
Fig. 2 is a front view illustrating an example of a closing plate of a first example.
Fig. 3 is a partially enlarged front view illustrating an example of a closing plate of a second example.
Fig. 4 is a partially enlarged front view illustrating an example of a closing plate of a third example.
Fig. 5 is a partially enlarged front view illustrating an example of a closing plate of a fourth example.
Fig. 6 is a partially enlarged front view illustrating an example of a closing plate of a fifth example.
Fig. 7 is a front view illustrating an example of an intermediate plate.
Fig. 8 is a diagram to describe a structure of a first tube.
Fig. 9 is a diagram only illustrating a cooling medium passage of a first tube and a tank portion.
Fig. 10 is a diagram only illustrating a storage portion of a first tube and both end portions thereof.
Fig. 11 is a schematic diagram of a first tube.
Fig. 12 is a schematic diagram of a second tube.
Fig. 13 is a schematic diagram of a third tube.
Fig. 14 is a schematic diagram of a fourth tube.
Fig. 15 is a schematic diagram of a fifth tube.
Figs. 16(a) to 16(c) are schematic diagrams illustrating a first example of a heat exchanger using a first tube and a third tube, where Fig. 16(a) illustrates a state where a heat storage material is not charged yet, Fig. 16(b) illustrates a state where the heat storage material is being charged, and Fig. 16(c) illustrates a state where the heat storage material is completely charged.
Fig. 17 is a schematic diagram illustrating a second example of a heat exchanger using a first tube and a third tube.
Fig. 18 is a schematic diagram illustrating a first example of a heat exchanger using a first tube, a second tube, and a third tube.
Fig. 19 is a schematic diagram illustrating a first example of a heat exchanger using a second tube.
Fig. 20 is a schematic diagram illustrating a modified example of the heat exchanger illustrated in Fig. 19.
Fig. 21 is a schematic diagram illustrating a first example of a heat exchanger using a first tube, a second tube, and a fifth tube.
Fig. 22 is a schematic diagram illustrating a first example of a heat exchanger using a second tube and a fourth tube.
Fig. 23 is a schematic diagram illustrating a first example of a heat exchanger using a first tube and a fourth tube.
Fig. 24 is a schematic diagram illustrating a first example of a heat exchanger using a first tube, a fourth tube, and a fifth tube.
Fig. 25 is a schematic diagram illustrating a first example of a heat exchanger using a first tube, a third tube, and a fourth tube.
Fig. 26 is a schematic diagram illustrating a first example of a heat exchanger using a second tube, a fourth tube, and a fifth tube.
Fig. 27 is a diagram to describe an example of a structure without an intermediate plate among the modified examples of the first tube.
Figs. 28(A) to 28(D) are diagrams to describe a first example of a structure including a plurality of intermediate plates among the modified examples of the first tube.
Fig. 29 is a broken-out section view taken along line A-A when the tube of Figs. 28(A) to 28(D) is formed.
Fig. 30 is a broken-out section view taken along line B-B when the tube of Figs. 28(A) to 28(D) is formed.
Figs. 31(A) to (D) are diagrams to describe a second example of a structure including a plurality of intermediate plates among the modified examples of the first tube.
Fig. 32 is a broken-out section view taken along line C-C when the tube of Figs. 31(A) to (D) is formed.
Fig. 33 is a broken-out section view taken along line D-D when the tube of Figs. 31(A) to (D) is formed.
Fig. 34 is a schematic perspective view illustrating an example of a heat exchanger mounted on the vehicle air conditioning device according to the embodiment.
Fig. 35 is a schematic diagram illustrating an example of the vehicle air conditioning device according to the embodiment.
Fig. 36 is a graph illustrating an example of a relation between a temperature and a time of a readily frozen area in the case of a fixed displacement compressor, where Fig. 36(a) is a graph illustrating a state where a heat storage material is not charged yet and Fig. 36(b) is a graph illustrating a state where the heat storage material is completely charged.
Fig. 37 is a graph illustrating a relation between a temperature and a time of a readily frozen area in the case of a fixed displacement compressor when a set temperature range of a thermostat is small after a heat storage material is charged.
Fig. 38 is a graph illustrating an example of a relation between a temperature and a time of a readily heated area, where Fig. 38(a) is a graph illustrating a state where a heat storage material is not charged yet and Fig. 38(b) is a graph illustrating a state where the heat storage material is completely charged.
Fig. 39 is a graph illustrating an example of a relation between a temperature and a time of a readily frozen area in the case of a variable displacement compressor, where Fig. 39(a) is a graph illustrating a state where a heat storage material is not charged yet and Fig. 39(b) is a graph illustrating a state where the heat storage material is completely charged.
Figs. 40(a) to 40(c) are schematic diagrams illustrating a first example of a heat exchanger using a first tube and a third tube, where Fig. 40(a) illustrates a state where a heat storage material is not charged yet, Fig. 40(b) illustrates a state where the heat storage material is being charged, and Fig. 40(c) illustrates a state where the heat storage material is completely charged.
Fig. 41 is a schematic diagram illustrating a second example of a heat exchanger using a first tube and a third tube.
Fig. 42 is a schematic diagram illustrating a first example of a heat exchanger using a first tube, a second tube, and a third tube.
Fig. 43 is a schematic diagram illustrating a first example of a heat exchanger using a second tube.
Fig. 44 is a schematic diagram illustrating a modified example of the heat exchanger illustrated in Fig. 43.

### Description of Embodiments

Hereinafter, an embodiment of the invention will be described with reference to the accompanying drawings. The embodiment below is merely an example of the invention, and the invention is not limited to the embodiment below. In addition, the components indicated by the same reference signs in the specification and the drawings have the same structure. As long as the effects of the invention are guaranteed, various modifications may be made.
(I)

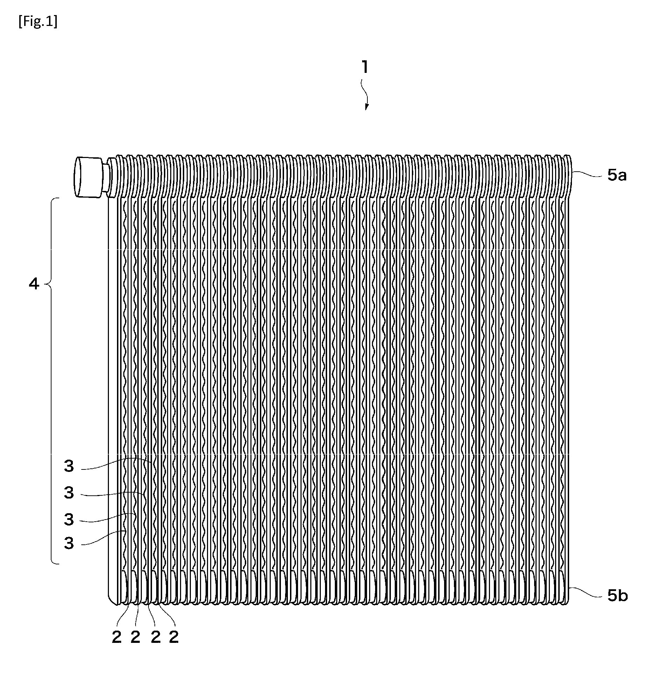

Fig. 1 is a schematic perspective view illustrating an example of a heat exchanger according to the embodiment. As illustrated in Fig. 1, a heat exchanger 1 includes a laminated body 4 obtained by alternately laminating tubes 2 and outer fins 3. The heat exchanger 1 is, for example, an evaporator, a heater core, or a heat exchanger serving as an evaporator and a heater core of a heat pump cycle.

One end portion of the tube 2 in the longitudinal direction is provided with one tank portion 5a, and the other end portion of the tube 2 in the longitudinal direction is provided with the other tank portion 5b. The tube 2 further includes a cooling medium passage (not illustrated) therein. The cooling medium passage (not illustrated) communicates with one tank portion 5a and the other tank portion 5b. One tank portion 5a and the other tank portion 5b distribute the cooling medium to the cooling medium passages inside each tube 2 and collect the cooling medium.

Two or more tubes of the tubes 2 further include a storage portion (not illustrated) therein. The storage portion (not illustrated) may store a heat storage material. Further, the storage portion does not communicate with the cooling medium passage.

The outer fin 3 is, for example, a corrugated type thin plate which is formed of aluminum alloy or copper alloy and is bent in a corrugated shape. The invention is not limited to the structure of the outer fin 3.

The laminated body 4 is formed by laminating the tubes 2 with the outer fin 3 interposed therebetween. In the laminated body 4, heat is transferred between the cooling medium passing through the cooling medium passage inside the tubes 2 or the heat storage material and blowing air passing through the outer fins 3. The invention is not limited to the number of the tubes 2 and the outer fins 3.

A laminated body 4 includes a plurality of charging spaces (not illustrated) which includes storage portions and does not communicate with one another. Each charging space is a first division space which charges the heat storage material or a second division space which does not charge the heat storage material.

Next, the plates forming the tubes 2 will be described.

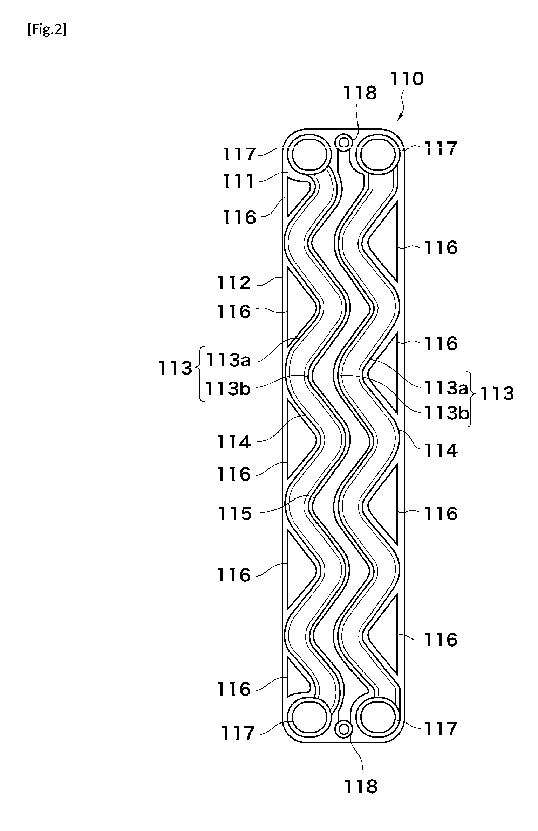

Fig. 2 is a front view illustrating an example of a closing plate of a first example. A closing plate 110 of the first example is formed of metal such as aluminum alloy or copper alloy and substantially has, for example, a rectangular shape in appearance. As illustrated in Fig. 2, the closing plate 110 of the first example is formed such that a surface (a surface illustrated in Fig. 2) 111 sandwiching an intermediate plate is provided with a peripheral wall 112 which is provided in the periphery of the closing plate 110 and two partition walls 113 (113a, 113b) which are provided in parallel along the longitudinal direction of the closing plate 110. Each of the partition walls 113 (113a, 113b) has, for example, a corrugated shape in the front view. In Fig. 2, two pairs of partition walls 113 (113a, 113b) are provided, but the invention is not limited thereto, and for example, a pair of partition walls 113 (113a, 113b) may be provided or three or more pairs of partition walls 113 (113a, 113b) may be provided.

It is preferable to form the peripheral wall 112 and the partition walls 113 (113a, 113b) by pressing one metal sheet.

The closing plate 110 of the first example includes a cooling medium passage 114 which is a recess formed between the pair of partition walls 113 (113a, 113b), a center storage portion 115 which is a recess formed between two center partition walls 113b, and an end storage portion 116 which is a recess formed between the partition wall 113a at both sides and the peripheral wall 112. Since the center storage portion 115 and the end storage portion 116 are disposed along the periphery of the cooling medium passage 114, heat may be effectively transferred between the cooling medium inside the cooling medium passage 114 and the heat storage material inside the center storage portion 115 and the end storage portion 116.

The closing plate 110 of the first example includes a penetration hole 117 which is formed at one end portion and the other end portion thereof so as to communicate with the cooling medium passage 114.

The closing plate 110 of the first example includes a penetration hole 118 which is formed at one end portion and the other end portion so as to communicate with the center storage portion 115.

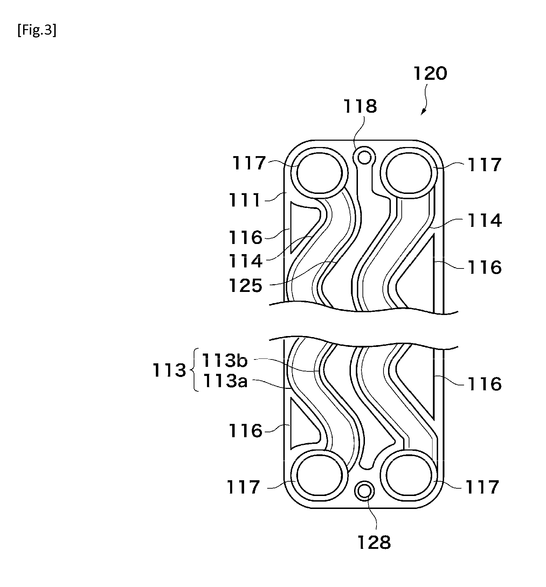

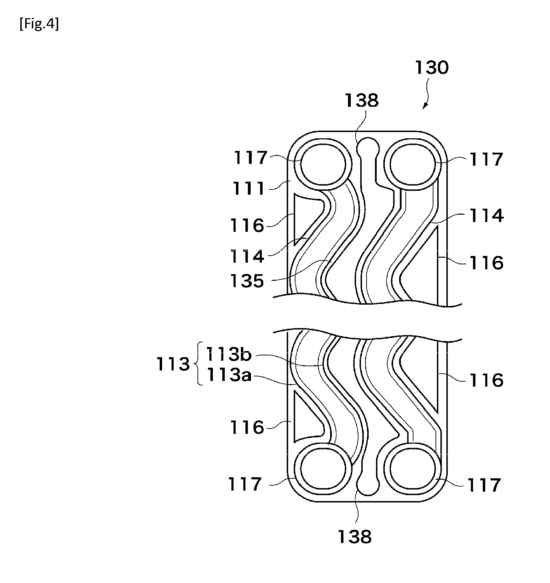

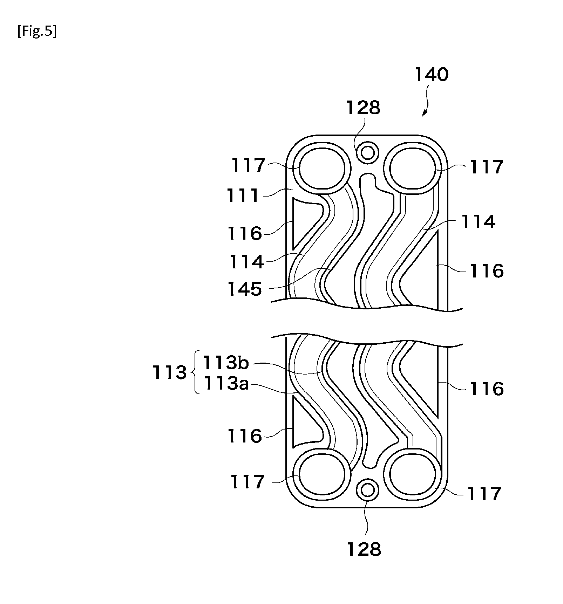

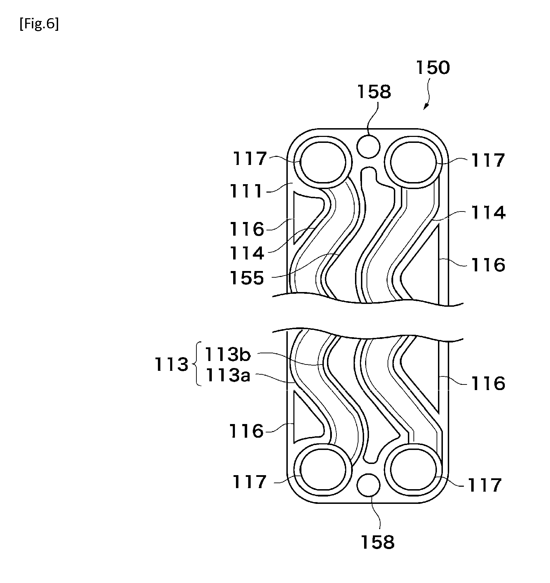

Fig. 3 is a partially enlarged front view illustrating an example of a closing plate of a second example. Fig. 4 is a partially enlarged front view illustrating an example of a closing plate of a third example. Fig. 5 is a partially enlarged front view illustrating an example of a closing plate of a fourth example. Fig. 6 is a partially enlarged front view illustrating an example of a closing plate of a fifth example. Next, closing plates 120, 130, 140, and 150 of the second to fifth examples will be described with reference to the drawings. The closing plates 120, 130, 140, and 150 of the second to fifth examples are formed so that the basic structure and the material are the same as those of the closing plate 110 of the first example illustrated in Fig. 2 except for the structure of both end portions of the center storage portion 115. For this reason, the same point as the closing plate 110 of the first example will not be described and only the different point will be described. In Figs. 3 to 6, the center portion of the closing plate in the longitudinal direction is not illustrated in the drawings. Further, in Figs. 3 to 6, the same reference sign of Fig. 2 is given to the same component as the closing plate 110 of the first example.

As illustrated in Fig. 3, the closing plate 120 of the second example includes the penetration hole 118 which is formed at one end portion so as to communicate with a center storage portion 125 and a penetration hole 128 which is formed at the other end portion so as not to communicate with the center storage portion 125.

As illustrated in Fig. 4, the closing plate 130 of the third example includes a concave portion 138 which is formed at one end portion and the other end portion so as to communicate with a center storage portion 135. In addition, the concave portion 138 and the penetration holes 118 and 128 are different in that a hole is not formed in the concave portion 138.

As illustrated in Fig. 5, the closing plate 140 of the fourth example includes the penetration hole 128 which is formed at one end portion and the other end portion so as not to communicate with a center storage portion 145.

As illustrated in Fig. 6, the closing plate 150 of the fifth example includes a concave portion 158 which is formed at one end portion and the other end portion so as not to communicate with a center storage portion 155. In addition, the concave portion 158 and the penetration holes 118 and 128 are different in that a hole is not formed in the concave portion 138.

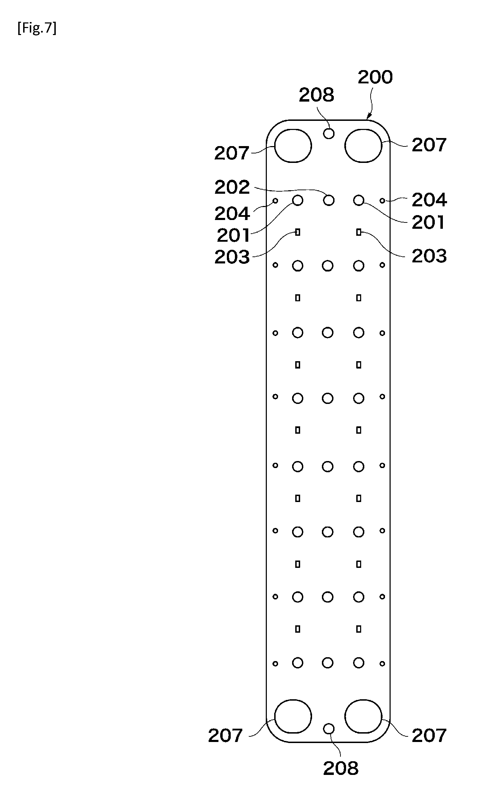

Fig. 7 is a front view illustrating an example of an intermediate plate. An intermediate plate 200 is formed of metal such as aluminum alloy or copper alloy and has the same appearance as the closing plate 110.

The intermediate plate 200 includes a penetration hole 207 which is formed at a position corresponding to the penetration hole 117 of the closing plate 110 illustrated in Fig. 2. Further, the intermediate plate 200 includes a penetration hole 208 which is formed at a position corresponding to the penetration hole 118 of the closing plate 110 illustrated in Fig. 2.

It is preferable that the intermediate plate 200 includes a first hole 201, a second hole 202, a third hole 203, and a fourth hole 204. The invention is not limited to the number of holes. Further, the first hole 201, the second hole 202, and the fourth hole 204 are circular, and the third hole 203 is rectangular in Fig. 3; however, the invention is not limited to the shapes of the holes 201, 202, 203, and 204.

It is preferable to form the holes in the intermediate plate 200 by punching one metal sheet.

Next, the type of tube will be described.

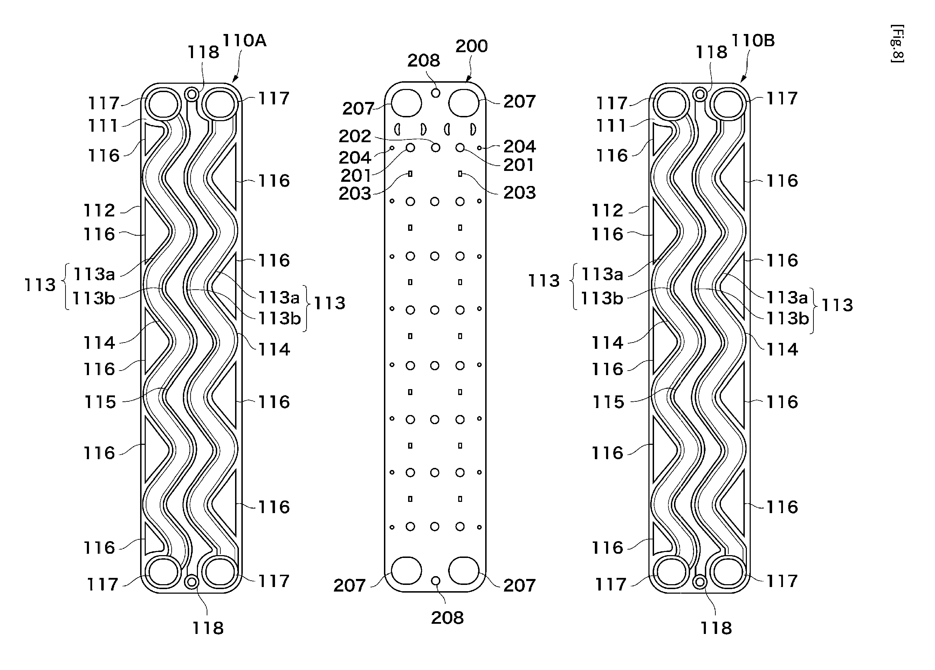

Fig. 8 is a diagram to describe a structure of the first tube. The first tube has a structure in which the intermediate plate 200 illustrated in Fig. 8 is sandwiched between a first closing plate 110A and a second closing plate 110B. In the first tube, both the first closing plate 110A and the second closing plate 110B are formed as the closing plate 110 of the first example illustrated in Fig. 2. The first tube is formed in a manner such that the top portions of the peripheral wall 112 and the partition wall 113 of the first closing plate 110A illustrated in Fig. 8 contact one surface of the intermediate plate 200, the top portions of the peripheral wall 112 and the partition wall 113 of the second closing plate 110B contact the other surface of the intermediate plate 200, and the plates are brazed (bonded) to each other.

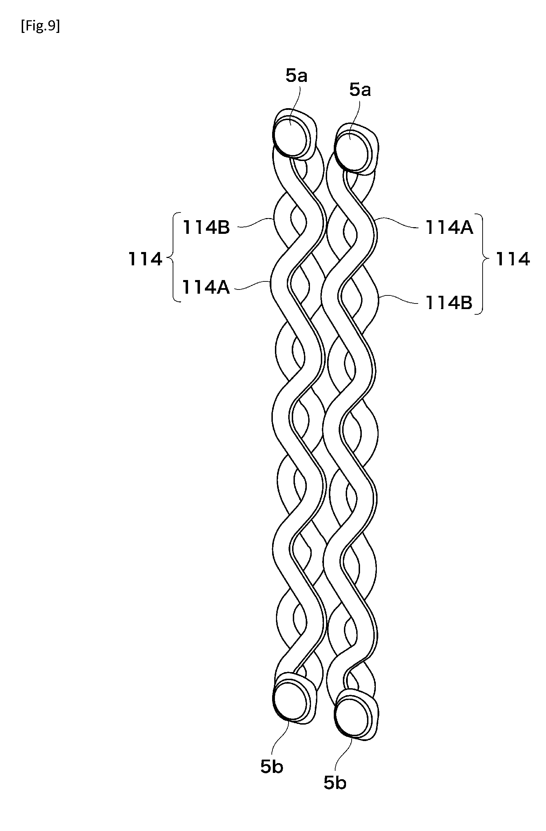

Fig. 9 is a diagram only illustrating the cooling medium passage of the first tube and the tank portion. The cooling medium passage 114 includes a first cooling medium passage 114A and a second cooling medium passage 114B. The first cooling medium passage 114A is formed between the first closing plate 110A and the intermediate plate 200 illustrated in Fig. 8. Further, the second cooling medium passage 114B is formed between the second closing plate 110B and the intermediate plate 200 illustrated in Fig. 8. The phases of the first cooling medium passage 114A and the second cooling medium passage 114B are opposite to each other. When the first hole 201 of the intermediate plate 200 illustrated in Fig. 7 is disposed at the overlapping portions of the first cooling medium passage 114A and the second cooling medium passage 114B, a cooling medium may circulate between the first cooling medium passage 114A and the second cooling medium passage 114B. In the embodiment, the cooling medium flow direction in the heat exchanger is not particularly limited, and as an example illustrated in Fig. 9, the cooling medium flows from one tank portion 5a toward the other tank portion 5b.

Each of the tank portions 5a and 5b is formed by overlapping the penetration hole 117 of the closing plate (the first closing plate) 110 illustrated in Fig. 2, the penetration hole 207 of the intermediate plate 200 illustrated in Fig. 7, and the penetration hole 117 of the closing plate (the second closing plate) 110 illustrated in Fig. 2.

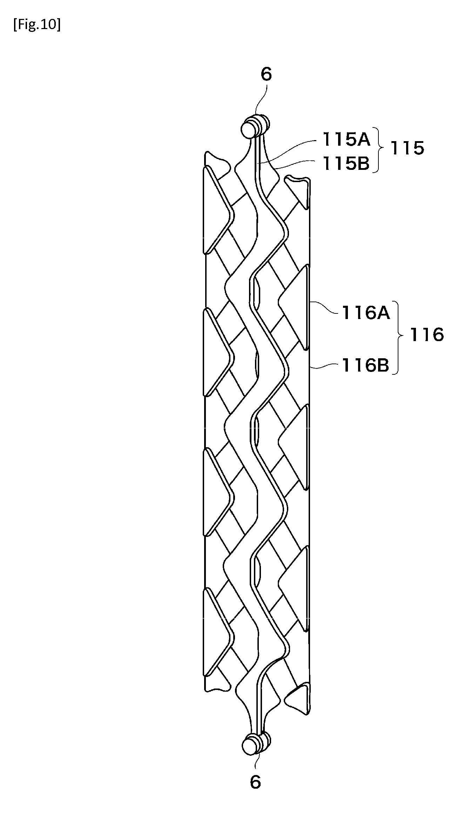

Fig. 10 is a diagram only illustrating the storage portion of the first tube and both end portions thereof. The first tube includes the center storage portion 115 and the end storage portion 116 as the storage portion.

The center storage portion 115 includes a first center storage portion 115A and a second center storage portion 115B. The first center storage portion 115A is formed between the first closing plate and the intermediate plate. Further, the second center storage portion 115B is formed between the second closing plate and the intermediate plate. The phases of the first center storage portion 115A and the second center storage portion 115B are opposite to each other. When the second hole 202 of the intermediate plate 200 illustrated in Fig. 7 is disposed at the overlapping portions of the first center storage portion 115A and the second center storage portion 115B, a heat storage material may circulate between the first center storage portion 115A and the second center storage portion 115B.

A charging portion 6 is provided at one end portion and the other end portion of the center storage portion 115. The charging portion 6 is formed by overlapping the penetration hole 118 of the closing plate (the first closing plate) 110 of the first example illustrated in Fig. 2, the penetration hole 208 of the intermediate plate 200 illustrated in Fig. 7, and the penetration hole 118 of the closing plate (the second closing plate) 110 of the first example illustrated in Fig. 2. For this reason, the charging portion 6 communicates with the center storage portion 115 and also communicates with both adjacent laminated tubes.

The end storage portion 116 includes a first end storage portion 116A and a second end storage portion 116B. The first end storage portion 116A is formed between the first closing plate and the intermediate plate. Further, the second end storage portion 116B is formed between the second closing plate and the intermediate plate. The first end storage portion 116A is disposed while the end portion thereof overlaps the second center storage portion 115B and the second end storage portion 116B. Further, the second end storage portion 116B is disposed while the end portion thereof overlaps the first center storage portion 115A and the first end storage portion 116A. When the third hole 203 of the intermediate plate 200 illustrated in Fig. 7 is disposed at the overlapping portions of the first end storage portion 116A and the second center storage portion 115B and the overlapping portions of the second end storage portion 116B and the first center storage portion 115A, the heat storage material may circulate between the first end storage portion 116A and the second center storage portion 115B and between the second end storage portion 116B and the first center storage portion 115A. When the fourth hole 204 of the intermediate plate 200 illustrated in Fig. 7 is disposed at the overlapping portions of the first end storage portion 116A and the second end storage portion 116B, the heat storage material may circulate between the first end storage portion 116A and the second end storage portion 116B.

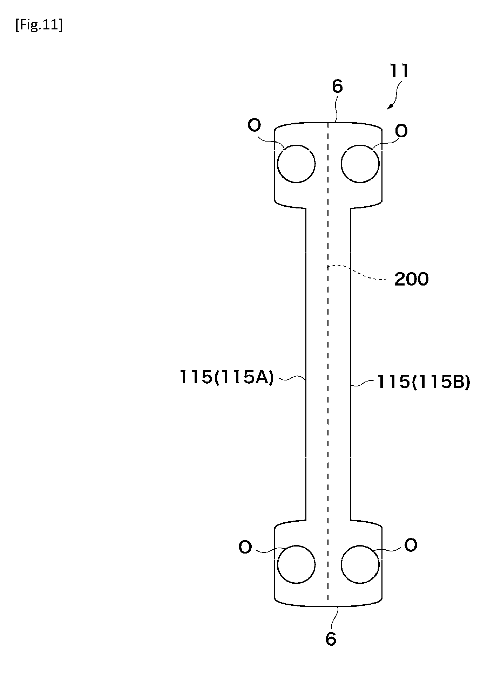

Fig. 11 is a schematic diagram of the first tube. Fig. 11 is a diagram in which the center storage portion 115 illustrated in Fig. 10 and both end portions thereof are simplified based on the following rule. In Fig. 11, the dumbbell shape indicates the center storage portion 115 of Fig. 10 and both end portions thereof. The protrusion portions of the upper and lower ends indicate one end portion and the other end portion of the center storage portion 115 of Fig. 10, and correspond to the charging portions 6 in the first tube 11. The uncolored circle O indicates a state where the portion communicates with the adjacent laminated tubes. Further, the dotted line which longitudinally cuts the dumbbell shape indicates the intermediate plate 200. The left side of the dotted line indicates the first center storage portion 115A of Fig. 10, and the right side of the dotted line indicates the second center storage portion 115B of Fig. 10.

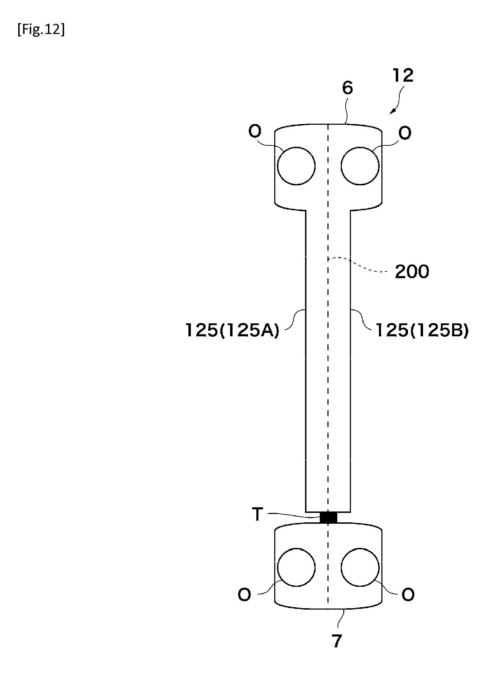

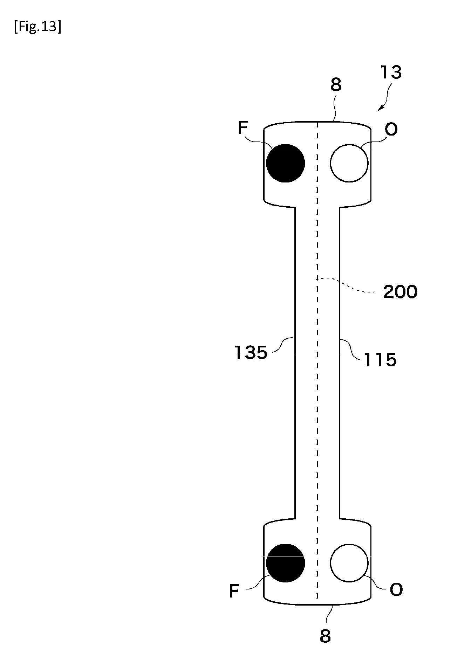

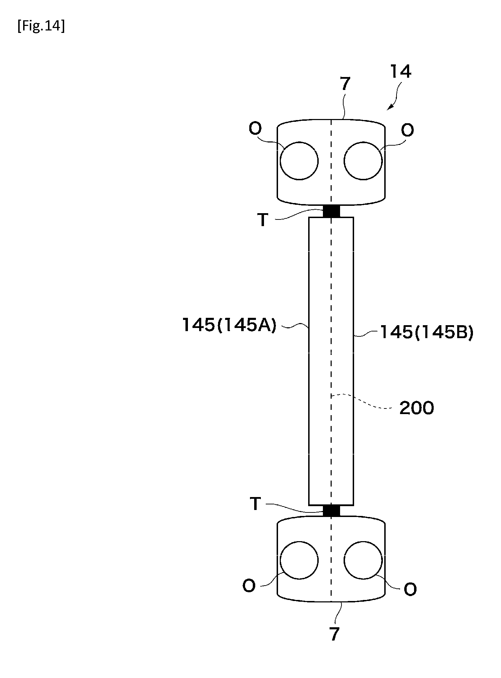

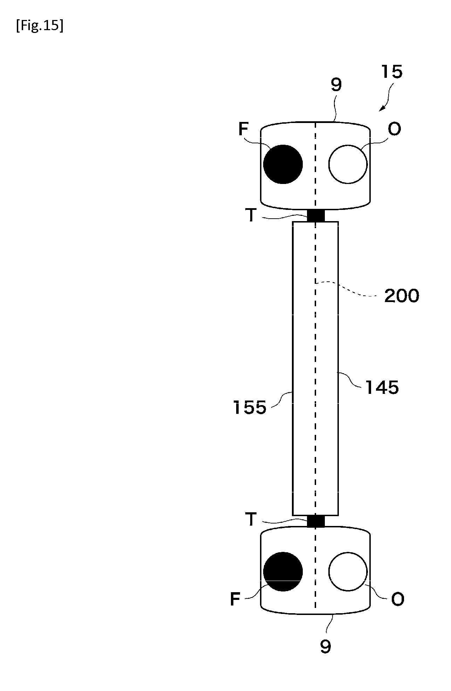

Fig. 12 is a schematic diagram of the second tube. Fig. 13 is a schematic diagram of the third tube. Fig. 14 is a schematic diagram of the fourth tube. Fig. 15 is a schematic diagram of the fifth tube. Next, the second to fifth tubes will be described with reference to the schematic diagrams. The schematic diagrams illustrated in Figs. 12 to 15 are created by the rule common to the schematic diagram illustrated in Fig. 11. For this reason, the rule described in Fig. 11 will not be described, and only new rule will be described.

The second tube 12 is a tube which uses the closing plates 120 of the second example illustrated in Fig. 3 as the first closing plate and the second closing plate. In Fig. 12, the colored square T indicates a state where the portion does not communicate with the center storage portion 125.

The second tube 12 includes the charging portion 6 which is formed at one end portion, and a communication portion 7 which is formed at the other end portion. The charging portion 6 is formed by overlapping the penetration hole 118 of the closing plate (the first closing plate) 120 of the second example illustrated in Fig. 3, the penetration hole 208 of the intermediate plate 200 illustrated in Fig. 7, and the penetration hole 118 of the closing plate (the second closing plate) 120 of the second example illustrated in Fig. 3. For this reason, the charging portion 6 communicates with the center storage portion 125 and also communicates with both adjacent laminated tubes. Further, the communication portion 7 is formed by overlapping the penetration hole 128 of the closing plate (the first closing plate) 120 of the second example illustrated in Fig. 3, the penetration hole 208 of the intermediate plate 200 illustrated in Fig. 7, and the penetration hole 128 of the closing plate (the second closing plate) 120 of the second example illustrated in Fig. 3. For this reason, the communication portion 7 does not communicate with the center storage portion 125 and communicates with both adjacent laminated tubes.

The third tube 13 is a tube which uses the closing plate 130 of the third example illustrated in Fig. 4 as the first closing plate, and uses the closing plate 110 of the first example illustrated in Fig. 2 as the second closing plate. In Fig. 13, the colored circle F indicates a state where the portion does not communicate with the adjacent laminated tube.

The third tube 13 includes a first closing portion 8 which is formed at one end portion and the other end portion. The first closing portion 8 is formed by overlapping the concave portion 138 of the closing plate (the first closing plate) 130 of the third example illustrated in Fig. 4, the penetration hole 208 of the intermediate plate 200 illustrated in Fig. 7, and the penetration hole 118 of the closing plate (the second closing plate) 110 of the first example illustrated in Fig. 2. For this reason, the first closing portion 8 communicates with the storage portions 115 and 135 and does not communicate with only one (the tube near the closing plate of the third example) of both adjacent laminated tubes.

The fourth tube 14 is a tube which uses the closing plate 140 of the fourth example illustrated in Fig. 5 as the first closing plate and the second closing.

The fourth tube 14 includes the communication portion 7 which is formed at one end portion and the other end portion. The communication portion 7 is formed by overlapping the penetration hole 128 of the closing plate (the first closing plate) 140 of the fourth example illustrated in Fig. 5, the penetration hole 208 of the intermediate plate 200 illustrated in Fig. 7, and the penetration hole 128 of the closing plate (the second closing plate) 140 of the fourth example illustrated in Fig. 5. For this reason, the communication portion 7 does not communicate with the center storage portion 145 and communicates with both adjacent laminated tubes. Further, as illustrated in Fig. 14, the fourth tube 14 may be formed so that the center storage portion 145 is hollow or the center storage portion 145 is not provided. A structure without the center storage portion 145 is, for example, a structure in which the partition wall 113b illustrated in Fig. 5 extends to a portion provided with the center storage portion 145. When the center storage portion 145 is not provided, the communication portion 7 is simply a portion "which communicates with both adjacent laminated tubes".

The fifth tube 15 is a tube which uses the closing plate 150 of the fifth example illustrated in Fig. 6 as the first closing plate and uses the closing plate 140 of the fourth example illustrated in Fig. 5 as the second closing plate.

The fifth tube 15 includes a second closing portion 9 which is formed at one end portion and the other end portion. The second closing portion 9 is formed by overlapping the concave portion 158 of the closing plate (the first closing plate) 150 of the fifth example illustrated in Fig. 6, the penetration hole 208 of the intermediate plate 200 illustrated in Fig. 7, and the penetration hole 128 of the closing plate (the second closing plate) 140 of the fourth example illustrated in Fig. 5. For this reason, the second closing portion 9 does not communicate with the storage portions 145 and 155 and does not communicate with only one (the tube near the closing plate of the fifth example) among both adjacent laminated tubes. Further, as illustrated in Fig. 15, the fifth tube 15 may be formed so that the center storage portions 145 and 155 are hollow or the center storage portions 145 and 155 are not provided. A structure without the center storage portions 145 and 155 is, for example, a structure in which the partition wall 113b illustrated in Figs. 5 and 6 extends to a portion provided with the center storage portions 145 and 155. When the center storage portions 145 and 155 are not provided, the second closing portion 9 is simply a portion "which does not communicate with only one of both adjacent laminated tubes".

Next, a heat exchanger according to the embodiment will be described. In the heat exchanger according to the embodiment, the laminated body includes a plurality of charging spaces which includes the storage portions and does not communicate with one another, and the charging spaces include the first division space which charges the heat storage material and the second division space which does not charge the heat storage material.

It is preferable that the tube include at least one of the first tube 11, the second tube 12, and the third tube 13.

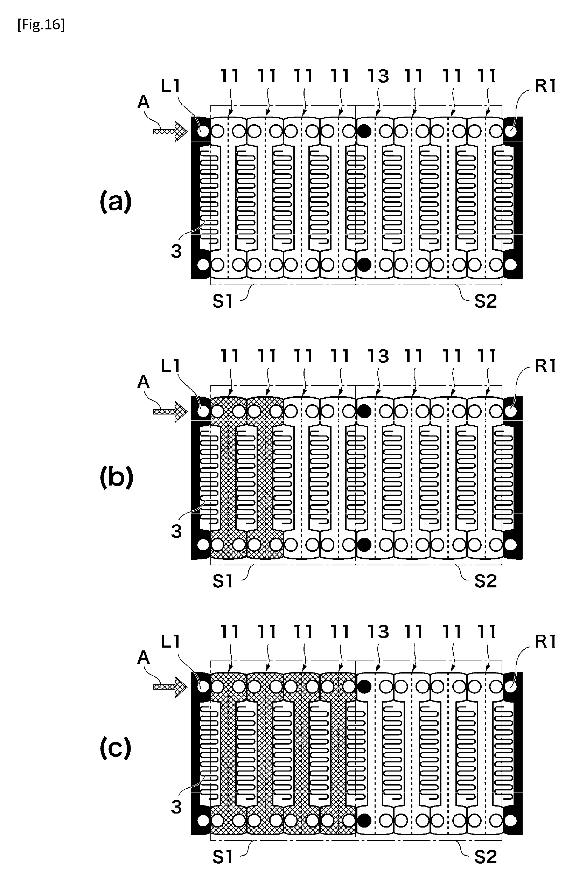

Figs. 16(a) to 16(c) are schematic diagrams illustrating a first example of a heat exchanger using the first tube and the third tube, where Fig. 16(a) illustrates a state where the heat storage material is not charged yet, Fig. 16(b) illustrates a state where the heat storage material is being charged, and Fig. 16(c) illustrates a state where the heat storage material is completely charged. Next, the laminated state of the tube will be described with reference to the schematic diagrams of the tube of Figs. 11 to 15. It is preferable that the tube include the first tube and the third tube as illustrated in Figs. 16(a) to 16(c).

First, as illustrated in Fig. 16(a), the first tubes 11 are laminated and one third tube 13 is disposed between the first tubes 11. Thus, the charging space is divided into a space S1 which is formed by the first tubes 11 laminated at the left side of the third tube 13 and a space S2 which is formed by the third tube 13 and the first tubes 11 laminated at the right side of the third tube 13.

Next, as illustrated in Fig. 16(b), a first heat storage material A is charged into the space S1 from one end portion (the left upper side in Fig. 16(b)) L1 of the tube in the longitudinal direction.

The invention is not limited to the heat storage material charging method. The heat storage material charging method is, for example, a method of decreasing the pressure of the charging space and charging the heat storage material into the charging space of which the pressure becomes a negative pressure. The charging space ventilation method is not particularly limited, but for example, a ventilation method using a vacuum pump may be employed. Since the pressure of the charging space is set to the negative pressure, the heat storage material may be more efficiently charged. Here, the negative pressure indicates a pressure state where the pressure is lower than the atmospheric pressure.

As illustrated in Fig. 16(c), the space S1 may be set as the first division space which charges the heat storage material A, and the space S2 may be set as the second division space which does not charge the heat storage material. In Fig. 16(c), the space S2 may charge the heat storage material and the space S1 may be empty without charging the heat storage material. In addition, it is preferable to prevent the heat storage material from flowing outward by burying one end portions L1 and R1 of the tube in the longitudinal direction by the use of an adhesive after the heat storage material is charged.

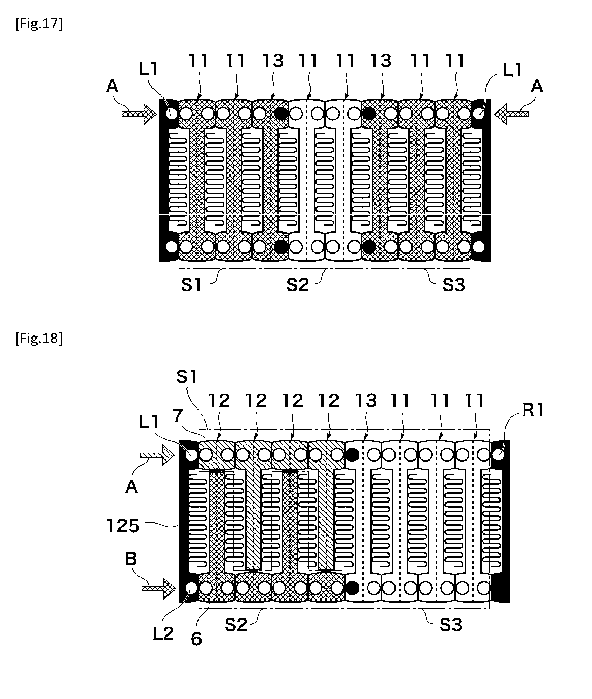

Fig. 17 is a schematic diagram illustrating a second example of a heat exchanger using a first tube and a third tube. First, as illustrated in Fig. 17, a plurality of first tubes 11 is laminated, and two third tubes 13 are disposed among the first tubes 11 so as to be separated from each other. Thus, the charging space is divided into the space S1 which is formed by the third tube and the first tubes 11 laminated at the left side of the third tube 13, the space S2 which is formed by the first tubes 11 laminated between two third tubes 13, and the space S3 which is formed by the third tube 13 and the first tubes 11 laminated at the right side of the third tube. Next, the space S1 charges the heat storage material A from one end portion (the left upper side in Fig. 17) L1 of the tube in the longitudinal direction, and the space S3 charges the heat storage material A from one end portion (the right upper side in Fig. 17) R1 of the tube in the longitudinal direction. Thus, the first division space (the space S1, S3) charging the heat storage material A and the second division space (the space S2) not charging the heat storage material may be alternately disposed.

The invention is not limited to the heat storage material charging sequence. As the heat storage material charging sequence, the heat storage material may be charged in order of the space S1 and the space S3, may be charged in order of the space S3 and the space S1, or may be charged into the space S1 and the space S3 at the same time. Further, Fig. 17 illustrates a structure in which the same heat storage material A is charged into the space S1 and the space S3, but a heat storage material different from the heat storage material A may be charged into any one of the space S1 and the space S3.

Fig. 18 is a schematic diagram illustrating a first example of a heat exchanger using a first tube, a second tube, and a third tube. As illustrated in Fig. 18, it is preferable that the tubes include the first tube 11, the second tube 12, and the third tube 13. First, as illustrated in Fig. 18, the second tubes 12 are laminated by alternately disposing the charging portion 6 and the communication portion 7, the first tubes 11 are laminated, and the third tube 13 is disposed between the second tube 12 and the first tube 11. Thus, the charging space is divided into the space S1 and the space S2 which are formed by the second tubes 12 and the space S3 which is formed by the third tube 13 and the first tubes 11. Next, the first heat storage material A is charged into the space S1 from one end portion (the left upper side in Fig. 18) L1 of the tube in the longitudinal direction, and the second heat storage material B is charged into the space S2 from the other end portion (the left lower side in Fig. 18) L2 of the tube in the longitudinal direction. Thus, the space S1 and the space S2 may be set as the first division spaces which charge the heat storage materials A and B, and the space S3 may be set as the second division space which does not charge the heat storage material.

The invention is not limited to the heat storage material charging sequence. As the heat storage material charging sequence, for example, the heat storage material may be charged in order of the space S1 and the space S2, may be charged in order of the space S2 and the space S1, or may be charged into the space S1 and the space S2 at the same time. The modified example of the heat exchanger of Fig. 18 is, for example, a structure in which the heat storage material is charged only into the space S1, a structure in which the heat storage material is charged only into the space S2, a structure in which the heat storage material is not charged only into the space S1, or a structure in which the heat storage material is not charged only into the space S2. Further, in a structure in which the heat storage material is charged into two spaces of the space S1, the space S2, and the space S3, the heat storage material charged into two spaces may be the same heat storage material or different heat storage materials.

Fig. 18 illustrates a structure in which the storage portion of the space S1 and the storage portion of the space S2 are alternately disposed, but the invention is not limited thereto. When the heat exchanger illustrated in Fig. 18 is modified so that at least one of the second tubes 12 is turned upside down, belonging of the storage portion is changed to the space S2 from the space S1, or belonging of the storage portion is changed to the space S1 the space S2. Thus, the storage portions of the spaces S1 may be disposed in a line or the storage portions of the spaces S2 may be disposed in a line.

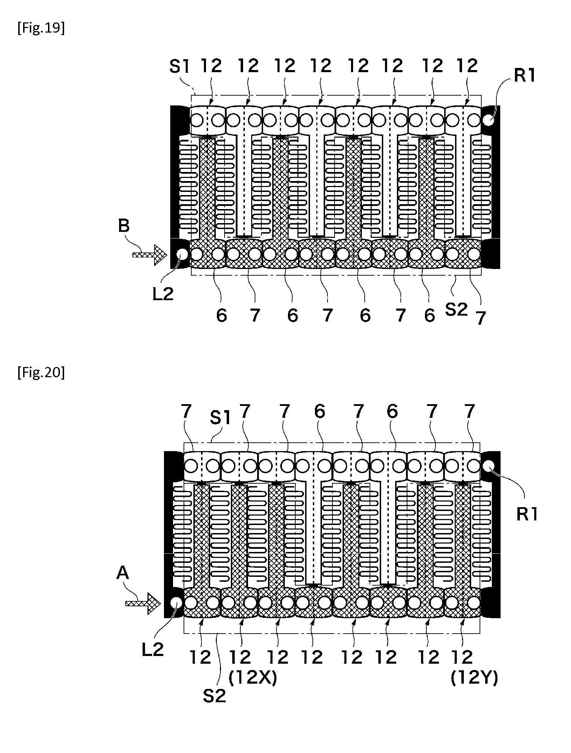

Fig. 19 is a schematic diagram illustrating a first example of a heat exchanger using a second tube. As illustrated in Fig. 19, it is preferable that the tubes include the second tube 12. First, as illustrated in Fig. 19, the second tubes 12 are laminated by alternately disposing the charging portion 6 and the communication portion 7. Thus, the charging space is divided into the space S1 and the space S2. Next, the heat storage material B is charged into the space S2 from the other end portion (the left lower side in Fig. 19) L2 of the tube in the longitudinal direction. Thus, the storage portion of the second division space (the space S1) which does not charge the heat storage material may be disposed between the storage portions of the first division spaces (the spaces S2) which charge the heat storage material. In Fig. 19, a structure may be obtained in which the heat storage material is charged into the space S1 and the heat storage material is not charged into the space S2.

Fig. 20 is a schematic diagram illustrating a modified example of the heat exchanger illustrated in Fig. 19. Fig. 20 illustrates a structure in which the tube 12X located at the second position from the left side and the rightmost tube 12Y of the heat exchanger illustrated in Fig. 19 are turned upside down. When at least one of the second tubes 12 are turned upside down, belonging of the storage portion is changed to the space S2 from the space S1 or belonging of the storage portion is changed to the space S1 from the space S2. Thus, as illustrated in Fig. 20, the storage portion of the second division space (the space S1) which does not charge the heat storage material may be disposed at an arbitrary position.

It is preferable that the tube further include any one of the fourth tube and the fifth tube.

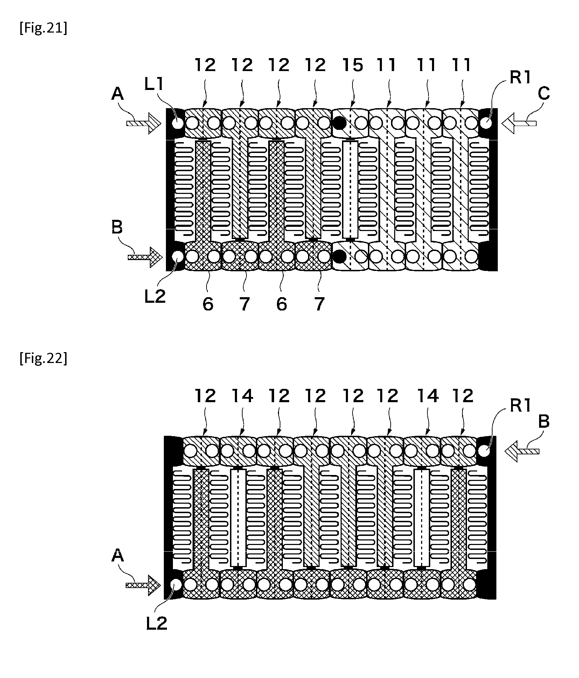

Fig. 21 is a schematic diagram illustrating a first example of a heat exchanger using a first tube, a second tube, and a fifth tube. As illustrated in Fig. 21, it is preferable that the tubes include the first tube 11, the second tube 12, and the fifth tube 15. As illustrated in Fig. 21, the second tubes 12 are laminated by alternately disposing the charging portion 6 and the communication portion 7, the first tubes 11 are laminated, and the fifth tube 15 is disposed between the second tube 12 and the first tube 11. Thus, as illustrated in Fig. 21, three kinds of heat storage materials A, B, and C may be disposed (the first division space). Further, a portion (second division space) in which the heat storage material is not disposed may be formed by disposing the fifth tube 15 at an arbitrary position. Further, the second division space may be formed without charging one or two of the heat storage materials A, B, and C.

Fig. 22 is a schematic diagram illustrating a first example of a heat exchanger using a second tube and a fourth tube. As illustrated in Fig. 22, it is preferable that the tubes include the second tube 12 and the fourth tube 14. As illustrated in Fig. 22, two kinds of heat storage materials A and B may be disposed (the first division space). Further, a portion (second division space) in which the heat storage material is not disposed may be formed by disposing the fourth tube 14 at an arbitrary position. Further, the second division space may be formed without charging any one of the heat storage materials A and B.

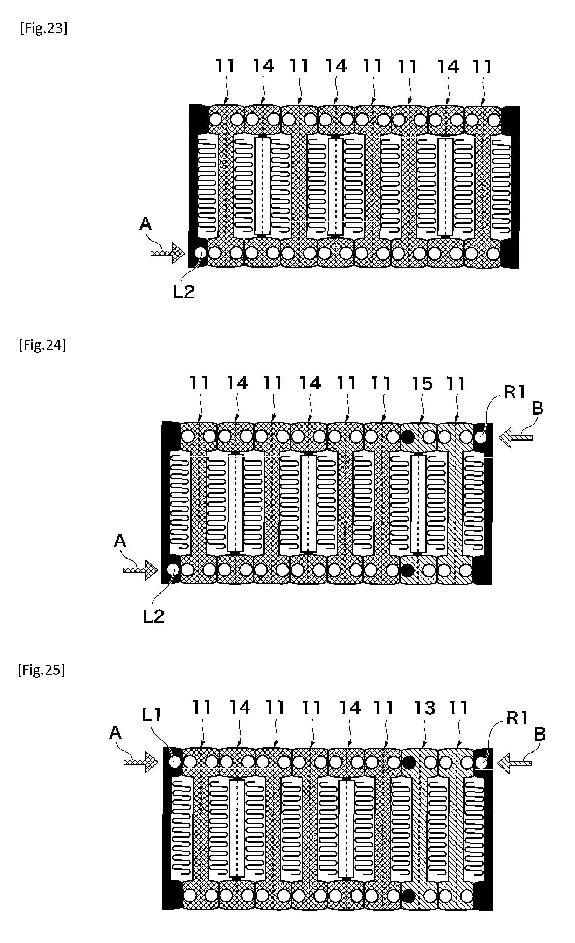

Fig. 23 is a schematic diagram illustrating a first example of a heat exchanger using a first tube and a fourth tube. As illustrated in Fig. 23, it is preferable that the tubes include the first tube 11 and the fourth tube 14. As illustrated in Fig. 23, a portion (second division space) in which the heat storage material is not disposed may be formed by disposing the fourth tube 14 at an arbitrary position.

Fig. 24 is a schematic diagram illustrating a first example of a heat exchanger using a first tube, a fourth tube, and a fifth tube. As illustrated in Fig. 24, it is preferable that the tubes include the first tube 11, the fourth tube 14, and the fifth tube 15. As illustrated in Fig. 24, two kinds of heat storage materials A and B may be disposed (the first division space). Further, also a portion (second division space) in which the heat storage material is not disposed may be formed by disposing the fourth tube 14 or the fifth tube 15 at an arbitrary position. Further, the second division space may be formed without charging any one of the heat storage materials A and B.

Fig. 25 is a schematic diagram illustrating a first example of a heat exchanger using a first tube, a third tube, and a fourth tube. As illustrated in Fig. 25, it is preferable that the tubes include the first tube 11, the third tube 13, and the fourth tube 14. As illustrated in Fig. 25, two kinds of heat storage materials A and B may be disposed (the first division space). Further, a portion (second division space) in which the heat storage material is not disposed may be formed by disposing the fourth tube 14 at an arbitrary position. Further, the second division space may be formed without charging any one of the heat storage materials A and B.

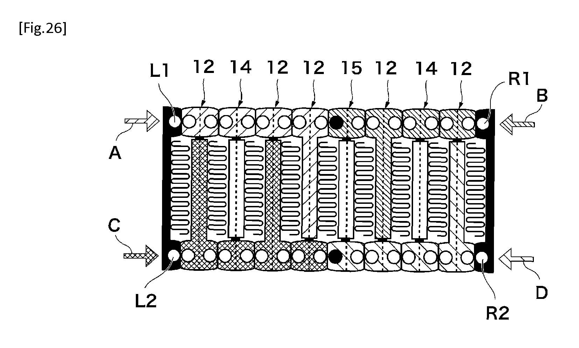

Fig. 26 is a schematic diagram illustrating a first example of a heat exchanger using a second tube, a fourth tube, and a fifth tube. As illustrated in Fig. 26, it is preferable that the tubes include the second tube 12, the fourth tube 14, and the fifth tube 15. As illustrated in Fig. 26, four kinds of heat storage materials A, B, C, and D may be disposed (the first division space). Further, a portion (second division space) in which the heat storage material is not disposed may be formed by disposing the fourth tube 14 or the fifth tube 15 at an arbitrary position. Further, the second division space may be formed without charging one, two, or three of the heat storage materials A, B, C, and D.

The invention is not limited to the combination, the scale, and the arrangement of the first to fifth tubes, and various modifications may be made as long as the effects of the invention are obtained.

As illustrated in Figs. 16 to 26, since the heat exchanger according to the embodiment may easily adjust the amount of the heat storage material by disposing the heat storage material at a part of the charging space, it is possible to increase the heat capacity of the heat exchanger and to promptly handle the cooling request of the passenger with a desirable balance.

In the heat exchanger according to the embodiment, since the space charging the heat storage material is disposed in the readily frozen area in the temperature distribution of the heat exchanger, it is possible to extend the time until the temperature of the readily frozen area decreases and to suppress the temperature distribution from being enlarged after a heat pump cycle is operated. The readily frozen area or the other area is determined based on the temperature distribution of the heat exchanger in a state where the heat storage material is not charged into the heat exchanger. As an example of the readily frozen area, a cooling medium inlet side area in the lamination direction of the tubes, an area in which the speed of air passing through the heat exchanger is relatively slow, or an area in which the temperature of air passing through the heat exchanger is relatively low may be exemplified. Meanwhile, it is possible to efficiently perform a cooling operation by averaging the temperature distribution of the heat exchanger in a manner such that many spaces without the heat storage material are disposed in an area other than the readily frozen area. In this way, since it is possible to prevent a part of the heat exchanger from being frozen, it is possible to promptly handle the cooling request of the passenger by decreasing the average temperature of the entire heat exchanger. Further, since the temperature distribution is not easily enlarged, it is possible to improve the cooling feeling of the passenger.

In the heat exchanger according to the embodiment, since the space charging the heat storage material is disposed at the readily heated area in the temperature distribution of the heat exchanger, it is possible to suppress an increase in temperature of the readily heated area. As a result, it is possible to suppress a bad smell from being generated by suppressing an excessive increase in temperature of the heat exchanger when the refrigerating cycle is stopped. The readily heated area or the other area is determined based on the temperature distribution of the heat exchanger in a state where the heat storage material is not charged into the heat exchanger. As an example of the readily heated area, an area in which the speed of air passing through the heat exchanger is relatively fast or an area in which the temperature of air passing through the heat exchanger is relatively high may be exemplified.

The heat storage material indicates a material which keeps a temperature of a contacting material at a predetermined temperature. The heat storage material is called a cold storage material when the keeping temperature is equal to or lower than a room temperature or is generally called a heat storage/cold storage material. The heat storage material of the invention includes the cold storage material and the heat storage/cold storage material. The heat storage material is, for example, a sensible heat storage material which uses specific heat, a latent heat storage material which uses a change in phase such as melting and freezing, or a chemical heat storage material which uses absorbing and generating of heat caused by a chemical reaction. Among these, it is preferable to use the latent heat storage material in that the amount of heat generated per unit mass is larger than that of the sensible heat storage material and the chemical stability is higher than that of the chemical heat storage material. The latent heat storage material is, for example, paraffin. The paraffin is a material containing a chain state hydrocarbon compound of which a general formula is CₙH₂ₙ₊₂ or a cyclic hydrocarbon compound of which a general formula is CₙH₂ₙ (here, n ≥ 3). In the embodiment, since the chemical stability of the paraffin is higher, it is preferable that the paraffin mainly contain a chain state hydrocarbon compound. The melting point (the freezing point) of the paraffin is different depending on the carbon number (the number of n in the general formula) or the carbon chain structure having a straight shape, a branched shape, or a ring shape. For this reason, it is possible to arbitrarily select paraffin having a phase change temperature in response to a target holding temperature. As a structure of disposing the heat storage materials having different phase change temperature values in the charging spaces, for example, a heat exchanger capable of conducting both a cooling operation and a warming operation may be realized by the combination of the low melting point paraffin (for example, the melting point: 3 to 10°C) and the high melting point paraffin (for example, the melting point: 77 to 85°C) having a melting point higher than the low melting point paraffin.

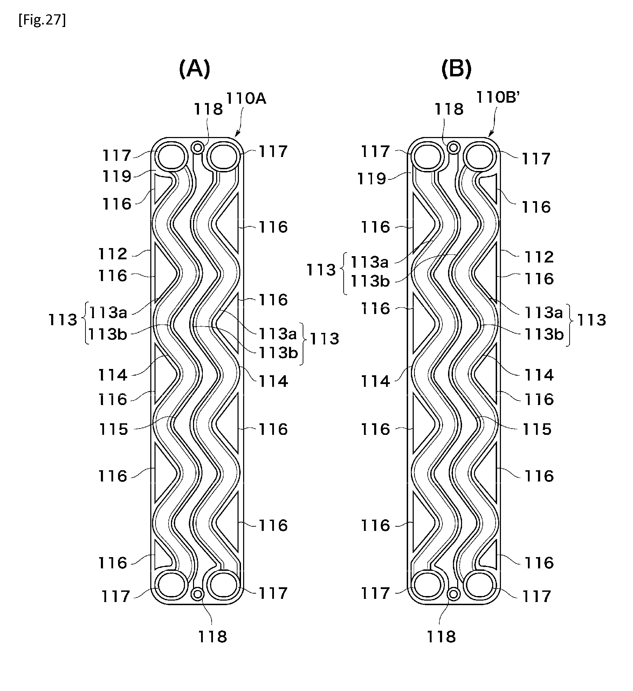

Figs. 27(A) and 27(B) are diagrams to describe an example of a structure without the intermediate plate among the modified examples of the first tube. The first to fifth tubes have a structure in which one intermediate plate is sandwiched between the first closing plate and the second closing plate, but the invention is not limited to this structure. As illustrated in Fig. 27, the first to fifth tubes may be a structure in which the first closing plate and the second closing plate are stuck to each other without the intermediate plate. Both the first closing plate 110A and a second closing plate 110B' illustrated in Figs. 27(A) and 27(B) correspond to the closing plate 110 of the first example illustrated in Fig. 2. Further, Figs. 27(A) and 27(B) illustrate a state where the second closing plate 110B' in which the longitudinal direction of the closing plate 110 illustrated in Fig. 2 is reversed. As illustrated in Fig. 27, the first tube is formed in a manner such that the first closing plate 110A and the second closing plate 110B are disposed so that inner surfaces 119 face each other while being reversed in the longitudinal direction illustrated in Fig. 2 and are brazed (bonded) to each other while the top portions of the peripheral walls 112 of the plates contact each other and the top portions of the partition walls 113 of the plates contact each other. Thus, the cooling medium passage 114 and the storage portions 115 and 116 are formed between the first closing plate 110A and the second closing plate 110B'. In Fig. 27, the longitudinal direction of the second closing plate 110B illustrated in Fig. 2 is reversed, but the longitudinal direction of the first closing plate 110A may be reversed. Then, the second to fifth tubes may be also formed similarly to the first tube except that the longitudinal direction of the specified first closing plate or the specified second closing plate is reversed. Since the tube does not include the intermediate plate, the tube may be decreased in weight by decreasing the amount of the material of the tube. Further, the ventilation resistance of the heat exchanger may be reduced by decreasing the thickness of the tube (the tube height).

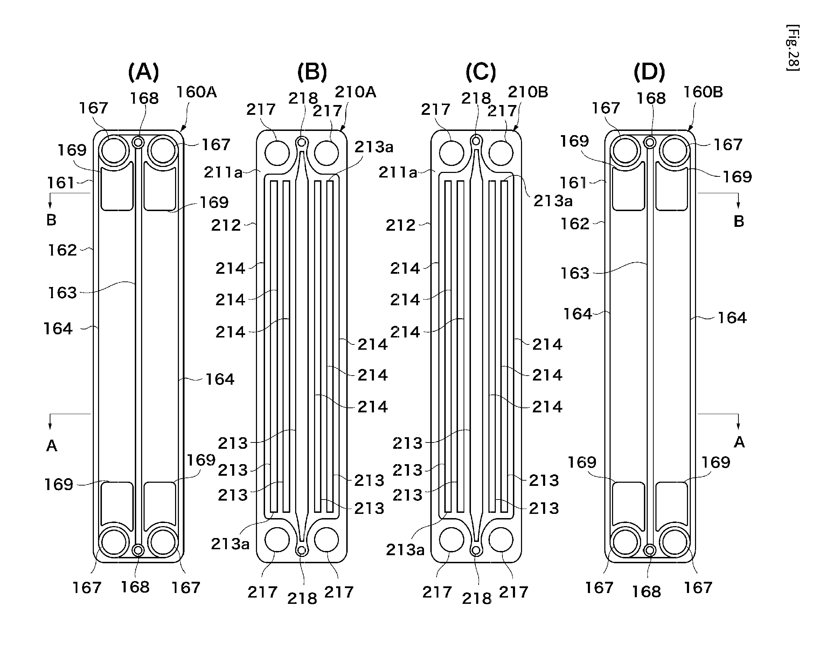

Figs. 28(A) to 28(D) are diagrams to describe a first example of a structure with a plurality of intermediate plates among the modified examples of the first tube. As illustrated in Fig. 28, the first to fifth tubes may be a structure in which the intermediate plates are sandwiched between the first closing plate and the second closing plate. Figs. 28(A) to 28(D) illustrate a structure which includes first and second intermediate plates 210A and 210B as the intermediate plate, a first closing plate 160A, and a second closing plate 160B.

Since the first intermediate plate 210A and the second intermediate plate 210B illustrated in Figs. 28(A) to 28(D) have the same configuration, the first intermediate plate 210A will be described representatively. The first intermediate plate 210A includes a peripheral bonding surface 212 which is formed in the periphery of the plate and five partition surfaces 213 which are formed in parallel along the longitudinal direction of the plate which are formed at one surface 211a. In Fig. 28, the partition surface 213 has a linear shape (a rectangular shape) in the front view, but may be formed in an infinite shape such as a corrugated shape. Further, five partition surface 213 are provided in Fig. 28, but the invention is not limited thereto, and the number of partition surfaces may be increased or decreased. The first intermediate plate 210A includes a storage portion 214 which is a recess formed between the peripheral bonding surface 212 and the partition surface 213 or between the partition surfaces 213. The first intermediate plate 210A includes a penetration hole 217 forming a tank portion and a penetration hole 218 communicating with the storage portion 214 which are formed respectively at one end portion and the other end portion.

Since the first closing plate 160A and the second closing plate 160B illustrated in Figs. 28(A) to 28(D) have the same configuration, the first closing plate 160A will be described representatively. The first closing plate 160A includes a peripheral wall 162 which is formed in the periphery of the plate, a partition wall 163 which is formed in the longitudinal direction of the plate, a penetration hole 167 which forms the tank portion, and a penetration hole 168 which is formed at a position corresponding to each of the penetration holes 218 of the intermediate plates 210A and 210B which are formed at a surface 161 sandwiching the intermediate plate. The first closing plate 160A includes a cooling medium passage 164 which is a recess formed between the peripheral wall 162 and the partition wall 163. The cooling medium passage 164 has an area in which the entire storage portion 214 is received therein when the intermediate plates 210A and 210B overlap each other and has a depth in which the outer surface of the bottom portion of the storage portion 214 contacts the inner surface of the bottom portion of the cooling medium passage 164. Further, the first closing plate 160A further includes a concave portion 169 which is formed at a position corresponding to an end portion 213a of the partition surface 213 of each of the intermediate plates 210A and 210B in the longitudinal direction.

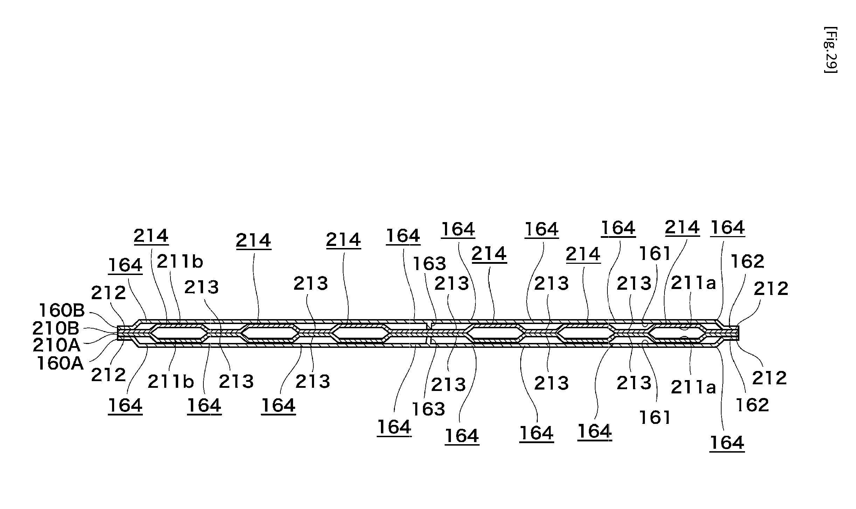

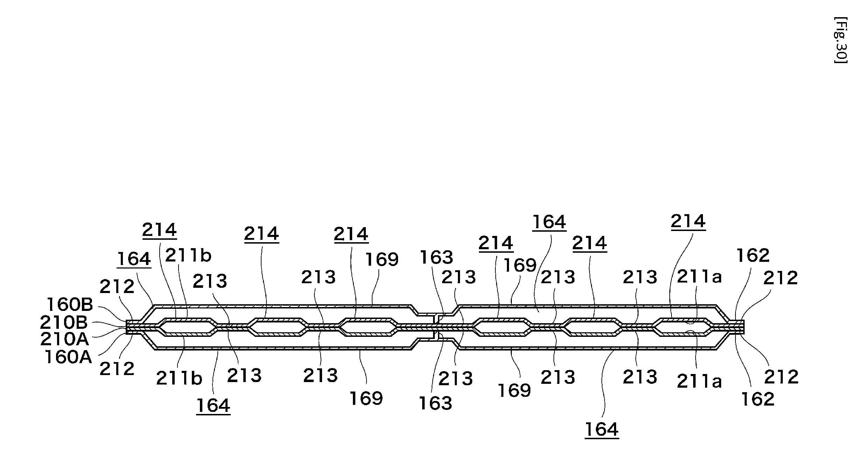

Fig. 29 is a broken-out section view taken along line A-A when the tube of Figs. 28(A) to 28(D) is formed. Fig. 30 is a broken-out section view taken along line B-B when the tube of Figs. 28(A) to 28(D) is formed. The first tube is formed in a manner such that one surface 211a of the first intermediate plate 210A and one surface 211a of the second intermediate plate 210B are disposed so as to face each other, the peripheral bonding surfaces 212 and the partition surfaces 213 of the plates contact each other, the top portions of the peripheral wall 162 and the partition wall 163 of the first closing plate 160A and the second closing plate 160B contact the other surfaces 211b of the first intermediate plate 210A and the second intermediate plate 210B, and the plates are brazed (bonded) to each other. Thus, as illustrated in Fig. 29, the storage portion 214 is formed between the first intermediate plate 210A and the second intermediate plate 210B, and the cooling medium passage 164 is formed between the first closing plate 160A and the first intermediate plate 210A and between the second closing plate 160B and the second intermediate plate 210B.

As illustrated in Fig. 29, since the outer surface of the bottom portion of the storage portion 214 contacts the inner surface of the bottom portion of the cooling medium passage 164 so that the cooling medium passage 164 and the storage portion 214 are alternately disposed along the side surface of the tube, it is possible to efficiently cool the outer fins by the cooling medium and the heat storage material. Further, since the concave portion 169 is provided as illustrated in Fig. 30, the cooling medium may be circulated in the cooling medium passage 164 between the storage portions 214 even in a structure in which the outer surface of the bottom portion of the storage portion 214 contacts the inner surface of the bottom portion of the cooling medium passage 164.

The second to fifth tubes may be also formed similarly to the first tube except that each of the first intermediate plate 210A and the second intermediate plate 210B is changed as a plate having a predetermined structure. As the plate having a predetermined structure in the second tube, an intermediate plate (not illustrated) is used in which the penetration hole 218 of the other end portion of each of the first intermediate plate 210A and the second intermediate plate 210B illustrated in Figs. 28(A) to 28(D) is changed as the penetration hole not communicating with the storage portion 214. As the plate having a predetermined structure in the third tube, an intermediate plate (not illustrated) is used in which the penetration hole 218 of each of one end portion and the other end portion of any one of the first intermediate plate 210A illustrated in Figs. 28(A) to 28(D) and the second intermediate plate 210B illustrated in Figs. 28(A) to 28(D) is changed as a concave portion communicating with the storage portion 214. As the plate having a predetermined structure in the fourth tube, an intermediate plate (not illustrated) is used in which the penetration hole 218 of each of one end portion and the other end portion of the first intermediate plate 210A and the second intermediate plate 210B illustrated in Figs. 28(A) to 28(D) is changed as a penetration hole not communicating with the storage portion 214. As the plate having a predetermined structure in the fifth tube, an intermediate plate (not illustrated) is used in which the penetration hole 218 of each of one end portion and the other end portion of the first intermediate plate 210A illustrated in Figs. 28(A) to 28(D) is changed as a penetration hole not communicating with the storage portion 214 and an intermediate plate (not illustrated) is used in which the penetration hole 218 of each of one end portion and the other end portion of the second intermediate plate 210B illustrated in Figs. 28(A) to 28(D) is changed as a concave portion not communicating with the storage portion 214.

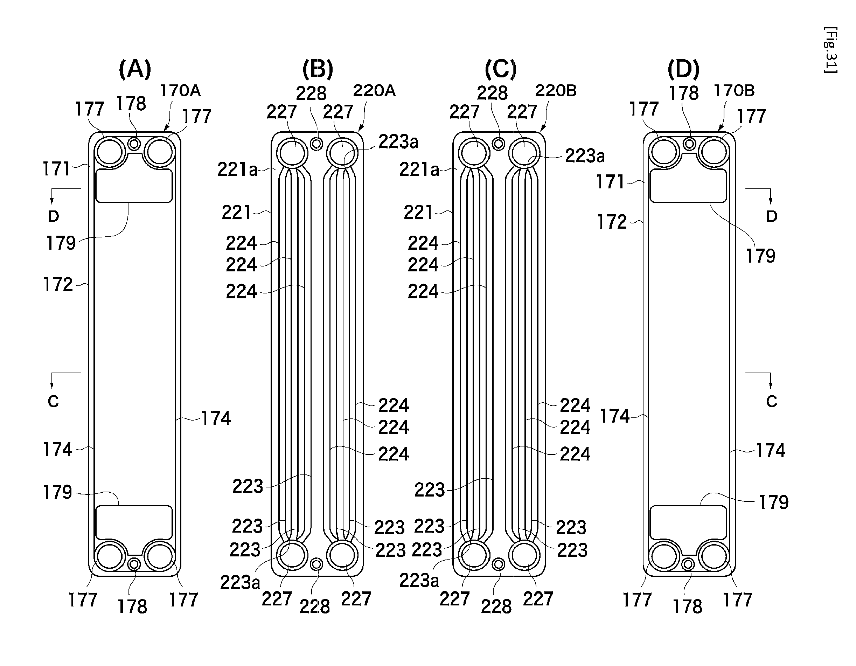

Figs. 31(A) to 31(D) are diagrams to describe a second example of a structure with a plurality of intermediate plates among the modified examples of the first tube. Figs. 31(A) to 31(D) illustrate a structure which includes first and second intermediate plates 220A and 220B as the intermediate plate, a first closing plate 170A, and a second closing plate 170B.

Since the first intermediate plate 220A and the second intermediate plate 220B illustrated in Figs. 31(A) to 31(D) have the same configuration, the first intermediate plate 220A will be described representatively. The first intermediate plate 220A includes a peripheral bonding surface 222 which is provided in the periphery of the plate and five partition surfaces 223 which are formed in parallel along the longitudinal direction of the plate which are formed at one surface 221a. In Fig. 31, the partition surface 223 has a linear shape (a rectangular shape) in the front view, but may be formed in an infinite shape such as a corrugated shape. Further, five partition surfaces 223 are provided in Fig. 31, but the invention is not limited thereto, and the number of partition surfaces may be increased or decreased. The first intermediate plate 220A includes a cooling medium passage 224 which is a recess formed between the peripheral bonding surface 222 and the partition surface 223 or between the partition surfaces 223. The first intermediate plate 220A includes a penetration hole 227 and a penetration hole 228 forming a tank portion whish are formed respectively at one end portion and the other end portion.

Since the first closing plate 170A and the second closing plate 170B illustrated in Figs. 31(A) to 31(D) have the same configuration, the first closing plate 170A will be described representatively. The first closing plate 170A includes a peripheral wall 172 which is formed in the periphery of the plate, a penetration hole 177 which forms the tank portion, and a penetration hole 178 which is formed at a position corresponding to each of the penetration holes 228 of the intermediate plates 220A and 220B which are formed at a surface 171 sandwiching the intermediate plate. The first closing plate 170A includes a storage portion 174 which is a recess surrounded by the peripheral wall 172. The storage portion 174 has an area in which the entire cooling medium passage 224 is received therein when the intermediate plates 220A and 220B overlap each other and has a depth in which the outer surface of the bottom portion of the cooling medium passage 224 contacts the inner surface of the bottom portion of the storage portion 174. Further, the first closing plate 170A further includes a concave portion 179 which is formed at a position corresponding to an end portion 223a of the partition surface 223 of each of the intermediate plates 220A and 220B in the longitudinal direction. Further, the first closing plate 170A may further include a partition wall (not illustrated) which defines the storage portion 174 in the longitudinal direction.

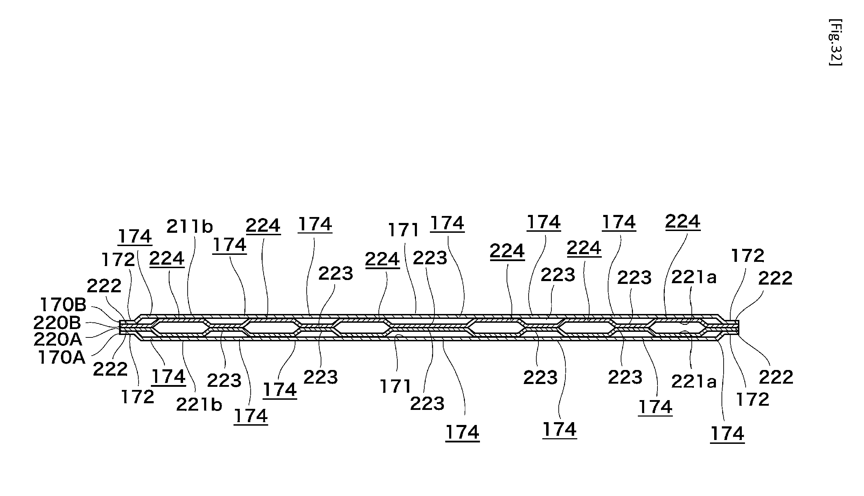

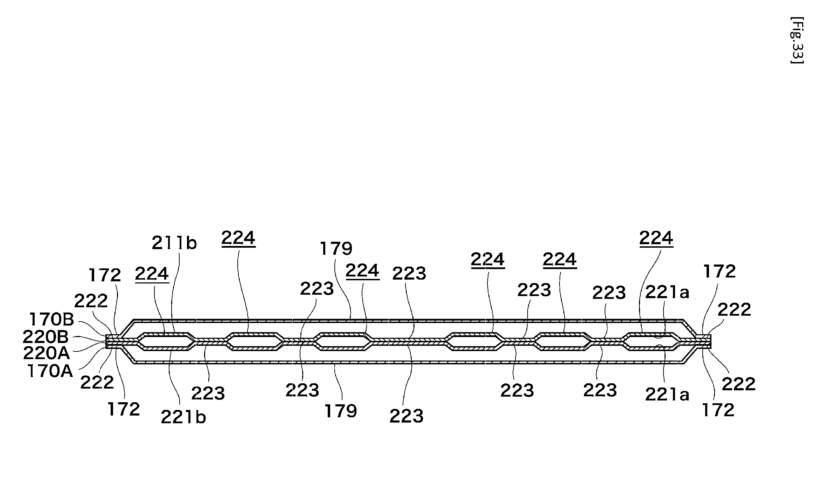

Fig. 32 is a broken-out section view taken along line C-C when the tube of Figs. 31(A) to 31(D) is formed. Fig. 33 is a broken-out section view taken along line D-D when the tube of Figs. 31(A) to 31(D) is formed. The first tube is formed in a manner such that one surface 221a of the first intermediate plate 220A and one surface 221a of the second intermediate plate 220B are disposed so as to face each other, the peripheral bonding surfaces 222 and the partition surfaces 223 of the plates contact each other, the top portions of the peripheral walls 172 of the first closing plate 170A and the second closing plate 170B respectively contact the other surfaces 221b of the first intermediate plate 220A and the second intermediate plate 220B, and the plates are brazed (bonded) to each other. Thus, as illustrated in Fig. 32, the cooling medium passage 224 is formed between the first intermediate plate 220A and the second intermediate plate 220B, and the storage portion 174 is formed between the first closing plate 170A and the first intermediate plate 220A and between the second closing plate 170B and the second intermediate plate 220B.

As illustrated in Fig. 32, since the outer surface of the bottom portion of the cooling medium passage 224 contacts the inner surface of the bottom portion of the storage portion 174 so that the storage portion 174 and the cooling medium passage 224 are alternately disposed along the side surface of the tube, it is possible to efficiently cool the outer fins by the cooling medium and the heat storage material. Further, since the concave portion 179 is provided as illustrated in Fig. 33, the heat storage material may be circulated in the storage portion 174 between the cooling medium passages 224 in the charging step of charging the heat storage material even in a structure in which the outer surface of the bottom portion of the cooling medium passage 224 contacts the inner surface of the bottom portion of the storage portion 174.

The second to fifth tubes may be formed similarly to the first tube except that the first closing plate 170A and the second closing plate 170B are changed as a plate having a predetermined structure. As the plate having a predetermined structure in the second tube, a closing plate (not illustrated) is used in which the penetration hole 178 of the other end portion of each of the first closing plate 170A and the second closing plate 170B illustrated in Figs. 31(A) to 31(D) is changed as a penetration hole not communicating with the storage portion 174. As the plate having a predetermined structure in the third tube, a closing plate (not illustrated) is used in which the penetration hole 178 of each of one end portion and the other end portion of any one of the first closing plate 170A illustrated in Figs. 31(A) to 31(D) and the second closing plate 170B illustrated in Figs. 31(A) to 31(D) is changed as a concave portion communicating with the storage portion 174. As the plate having a predetermined structure in the fourth tube, a closing plate (not illustrated) is used in which the penetration hole 178 of each of one end portion and the other end portion of the first closing plate 170A and the second closing plate 170B illustrated in Figs. 31(A) to 31(D) is changed as a penetration hole not communicating with the storage portion 174. As the plate having a predetermined structure in the fifth tube, a closing plate (not illustrated) is used in which the penetration hole 178 of each of one end portion and the other end portion of the first closing plate 170A illustrated in Figs. 31(A) to 31(D) is changed as a penetration hole not communicating with the storage portion 174 and a closing plate (not illustrated) is used in which the penetration hole 178 of each of one end portion and the other end portion of the second closing plate 170B illustrated in Figs. 31(A) to 31(D) is changed as a concave portion not communicating with the storage portion 174.

As illustrated in Figs. 28 to 33, since the heat storage material storage portion 214 or the cooling medium passage 224 may be formed inside the intermediate plate by sticking the intermediate plates to each other, for example, as illustrated in Fig. 8, the partition wall 113 which divides the cooling medium passage 114 and the storage portions 115 and 116 does not need to be formed in the first closing plate 110A and the second closing plate 110B. For this reason, it is possible to easily change the position or the volume of each of the storage portions 214 and 174.
(II)

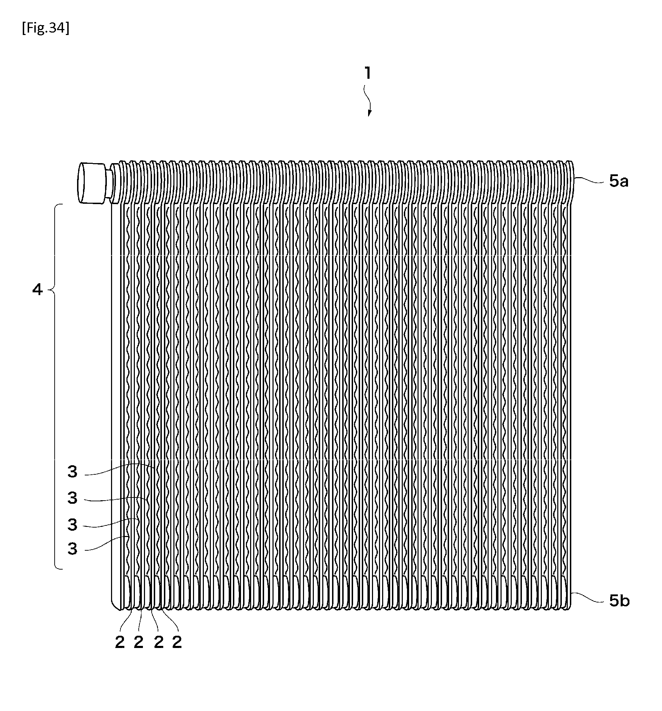

Fig. 34 is a schematic perspective view illustrating an example of a heat exchanger mounted on the vehicle air conditioning device according to the embodiment. As illustrated in Fig. 34, the heat exchanger 1 includes the laminated body 4 which is formed by alternately laminating the tubes 2 and the outer fins 3. The heat exchanger 1 is, for example, an evaporator, a hot gas type heater core, or a heat exchanger serving as an evaporator and a heater core of a heat pump cycle.

One end portion of the tube 2 in the longitudinal direction is provided with one tank portion 5a, and the other end portion of the tube 2 in the longitudinal direction is provided with the other tank portion 5b. The tube 2 further includes a cooling medium passage (not illustrated) therein. The cooling medium passage communicates with one tank portion 5a and the other tank portion 5b. One tank portion 5a and the other tank portion 5b distribute the cooling medium to the cooling medium passages inside each tube 2 and collect the cooling medium.

Two or more tubes of the tubes 2 further include a storage portion (not illustrated) therein. The storage portion may store a heat storage material. Further, the storage portion does not communicate with the cooling medium passage.

The outer fin 3 is, for example, a corrugated type thin plate which is formed of aluminum alloy or copper alloy and is bent in a corrugated shape. The invention is not limited to the structure of the outer fin 3.

The laminated body 4 is formed by laminating the tubes 2 with the outer fin 3 interposed therebetween. In the laminated body 4, heat is transferred between the cooling medium passing through the cooling medium passage inside the tubes 2 or the heat storage material and blowing air passing through the outer fins 3. The invention is not limited to the number of the tubes 2 and the outer fins 3.

The laminated body 4 includes a plurality of charging spaces (not illustrated) which includes storage portions and does not communicate with one another. Each charging space is the first division space which charges the heat storage material or the second division space which does not charge the heat storage material.

Next, a heat exchanger mounted on the vehicle air conditioning device according to the embodiment will be described. In the heat exchanger mounted on the vehicle air conditioning device according to the embodiment, the laminated body includes a plurality of charging spaces which include storage portions and does not communicate with one another, and the charging spaces include the first division space which charges the heat storage material and the second division space which does not charge the heat storage material.

It is preferable that the tubes include at least one of the first tube 11, the second tube 12, and the third tube 13.

Figs. 16(a) to 16(c) are schematic diagrams illustrating a first example of a heat exchanger using the first tube and the third tube, where Fig. 16(a) illustrates a state where the heat storage material is not charged yet, Fig. 16(b) illustrates a state where the heat storage material is being charged, and Fig. 16(c) illustrates a state where the heat storage material is completely charged. Next, the laminated state of the tube will be described with reference to the schematic diagrams of the tube of Figs. 11 to 15. It is preferable that the tubes include the first tube and the third tube as illustrated in Figs. 16(a) to 16(c).

First, as illustrated in Fig. 16(a), the first tubes 11 are laminated and one third tube 13 is disposed between the first tubes 11. Thus, the charging space is divided into a space S1 which is formed by the first tubes 11 laminated at the left side of the third tube 13 and a space S2 which is formed by the third tube 13 and the first tubes 11 laminated at the right side of the third tube 13.

Next, as illustrated in Fig. 16(b), the first heat storage material A is charged into the space S1 from one end portion (the left upper side in Fig. 16(b)) L1 of the tube in the longitudinal direction.

The invention is not limited to the heat storage material charging method. The heat storage material charging method is, for example, a method of decreasing the pressure of the charging space and charging the heat storage material into the charging space of which the pressure becomes a negative pressure. The charging space ventilation method is not particularly limited, but for example, a ventilation method using a vacuum pump may be employed. Since the pressure of the charging space is set to the negative pressure, the heat storage material may be more efficiently charged. Here, the negative pressure indicates a pressure state where the pressure is lower than the atmospheric pressure.

As illustrated in Fig. 16(c), the space S1 may be set as the first division space which charges the heat storage material A, and the space S2 may be set as the second division space which does not charge the heat storage material. In Fig. 16(c), the space S2 may be set as the first division space by charging the heat storage material, and the space S1 may be set as the second division space without charging the heat storage material. In addition, it is preferable to prevent the heat storage material from flowing outward by burying one end portions L1 and R1 of the tube in the longitudinal direction by the use of an adhesive after the heat storage material is charged.

Fig. 17 is a schematic diagram illustrating a second example of a heat exchanger using a first tube and a third tube. First, as illustrated in Fig. 17, a plurality of first tubes 11 is laminated, and two third tubes 13 are disposed among the first tubes 11 so as to be separated from each other. Thus, the charging space is divided into the space S1 which is formed by the third tube and the first tubes 11 laminated at the left side of the third tube 13, the space S2 which is formed by the first tubes 11 laminated between two third tubes 13, and the space S3 which is formed by the third tube 13 and the first tubes 11 laminated at the right side of the third tube. Next, the heat storage material A is charged into the space S1 from one end portion (the left upper side in Fig. 17) L1 of the tube in the longitudinal direction, and the heat storage material A is charged into the space S3 from one end portion (the right upper side in Fig. 17) R1 of the tube in the longitudinal direction. Thus, the space S1 and the space S3 (the first division space) which charge the heat storage material A and the space S2 (the second division space) which does not charge the heat storage material may be alternately disposed.

The invention is not limited to the heat storage material charging sequence. As the heat storage material charging sequence, the heat storage material may be charged in order of the space S1 and the space S3, may be charged in order of the space S3 and the space S1, or may be charged into the space S1 and the space S3 at the same time. Further, Fig. 17 illustrates a structure in which the same heat storage material A is charged into the space S1 and the space S3, but a heat storage material different from the heat storage material A may be charged into any one of the space S1 and the space S3.

Fig. 18 is a schematic diagram illustrating a first example of a heat exchanger using a first tube, a second tube, and a third tube. As illustrated in Fig. 18, it is preferable that the tubes include the first tube 11, the second tube 12, and the third tube 13. First, as illustrated in Fig. 18, the second tubes 12 are laminated by alternately disposing the charging portion 6 and the communication portion 7, the first tubes 11 are laminated, and the third tube 13 is disposed between the second tube 12 and the first tube 11. Thus, the charging space is divided into the space S1 and the space S2 which are formed by the second tubes 12 and the space S3 which is formed by the third tube 13 and the first tubes 11. Next, the first heat storage material A is charged into the space S1 from one end portion (the left upper side in Fig. 18) L1 of the tube in the longitudinal direction, and the second heat storage material B is charged into the space S2 from the other end portion (the left lower side in Fig. 18) L2 of the tube in the longitudinal direction. Thus, the space S1 and the space S2 may be set as the first division spaces which charge the heat storage materials A and B, and the space S3 may be set as the second division space which does not charge the heat storage material.

The invention is not limited to the heat storage material charging sequence. As the heat storage material charging sequence, for example, the heat storage material may be charged in order of the space S1 and the space S2, may be charged in order of the space S2 and the space S1, or may be charged into the space S1 and the space S2 at the same time. The modified example of the heat exchanger of Fig. 18 is, for example, a structure in which the heat storage material is charged only into the space S1, a structure in which the heat storage material is charged only into the space S2, a structure in which the heat storage material is not charged only into the space S1, or a structure in which the heat storage material is not charged only into the space S2. Further, in a structure in which the heat storage material is charged into two spaces of the space S1, the space S2, and the space S3, the heat storage material charged into two spaces may be the same heat storage material or different heat storage materials.

Fig. 18 illustrates a structure in which the storage portion of the space S1 and the storage portion of the space S2 are alternately disposed, but the invention is not limited thereto. When the heat exchanger illustrated in Fig. 18 is modified so that at least one of the second tubes 12 is turned upside down, belonging of the storage portion is changed to the space S2 from the space S2, or belonging of the storage portion is changed to the space S1 from the space S2. Thus, the storage portions of the spaces S1 may be disposed in a line or the storage portions of the spaces S2 may be disposed in a line.

Fig. 19 is a schematic diagram illustrating a first example of a heat exchanger using a second tube. As illustrated in Fig. 19, it is preferable that the tubes include the second tube 12. First, as illustrated in Fig. 19, the second tubes 12 are laminated by alternately disposing the charging portion 6 and the communication portion 7. Thus, the charging space is divided into the space S1 and the space S2. Next, the heat storage material B is charged into the space S2 from the other end portion (the left lower side in Fig. 19) L2 of the tube in the longitudinal direction. Thus, the storage portion of the second division space (the space S1) which does not charge the heat storage material may be disposed between the storage portions of the first division spaces (the spaces S2) which charge the heat storage material. In Fig. 19, the space S1 may be set as the first division space by charging the heat storage material and the space S2 may be set as the second division space without charging the heat storage material.

Fig. 20 is a schematic diagram illustrating a modified example of the heat exchanger illustrated in Fig. 19. Fig. 20 illustrates a structure in which the tube 12X located at the second position from the left side and the rightmost tube 12Y of the heat exchanger illustrated in Fig. 19 are turned upside down. When at least one of the second tubes 12 are turned upside down, belonging of the storage portion is changed to the space S2 from the space S1, or belonging of the storage portion is changed to the space S1 from the space S2. Thus, as illustrated in Fig. 20, the storage portion of the second division space (the space S1) which does not charge the heat storage material may be disposed at an arbitrary position.

It is preferable that the tube further include any one of the fourth tube and the fifth tube.

Fig. 21 is a schematic diagram illustrating a first example of a heat exchanger using a first tube, a second tube, and a fifth tube. As illustrated in Fig. 21, it is preferable that the tubes include the first tube 11, the second tube 12, and the fifth tube 15. As illustrated in Fig. 21, the second tubes 12 are laminated by alternately disposing the charging portion 6 and the communication portion 7, the first tubes 11 are laminated, and the fifth tube 15 is disposed between the second tube 12 and the first tube 11. Thus, as illustrated in Fig. 21, three kinds of heat storage materials A, B, and C may be disposed (the first division space). Further, a portion (second division space) in which the heat storage material is not disposed may be formed by disposing the fifth tube 15 at an arbitrary position. Further, the second division space may be formed without charging one or two of the heat storage materials A, B, and C.

Fig. 22 is a schematic diagram illustrating a first example of a heat exchanger using a second tube and a fourth tube. As illustrated in Fig. 22, it is preferable that the tubes include the second tube 12 and the fourth tube 14. As illustrated in Fig. 22, two kinds of heat storage materials A and B may be disposed (the first division space). Further, a portion (second division space) in which the heat storage material is not disposed may be formed by disposing the fourth tube 14 at an arbitrary position. Further, the second division space may be formed without charging any one of the heat storage materials A and B.

Fig. 23 is a schematic diagram illustrating a first example of a heat exchanger using a first tube and a fourth tube. As illustrated in Fig. 23, it is preferable that the tubes include the first tube 11 and the fourth tube 14. As illustrated in Fig. 23, a portion (second division space) in which the heat storage material is not disposed may be formed by disposing the fourth tube 14 at an arbitrary position.

Fig. 24 is a schematic diagram illustrating a first example of a heat exchanger using a first tube, a fourth tube, and a fifth tube. As illustrated in Fig. 24, it is preferable that the tubes include the first tube 11, the fourth tube 14, and the fifth tube 15. As illustrated in Fig. 24, two kinds of heat storage materials A and B may be disposed (the first division space). Further, a portion (second division space) in which the heat storage material is not disposed may be formed by disposing the fourth tube 14 or the fifth tube 15 at an arbitrary position. Further, the second division space may be formed without charging any one of the heat storage materials A and B.

Fig. 25 is a schematic diagram illustrating a first example of a heat exchanger using a first tube, a third tube, and a fourth tube. As illustrated in Fig. 25, it is preferable that the tubes include the first tube 11, the third tube 13, and the fourth tube 14. As illustrated in Fig. 25, two kinds of heat storage materials A and B may be disposed (the first division space). Further, a portion (second division space) in which the heat storage material is not disposed may be formed by disposing the fourth tube 14 at an arbitrary position. Further, the second division space may be formed without charging any one of the heat storage materials A and B.

Fig. 26 is a schematic diagram illustrating a first example of a heat exchanger using a second tube, a fourth tube, and a fifth tube. As illustrated in Fig. 26, it is preferable that the tubes include the second tube 12, the fourth tube 14, and the fifth tube 15. As illustrated in Fig. 26, four kinds of heat storage materials A, B, C, and D may be disposed (the first division space). Further, a portion (second division space) in which the heat storage material is not disposed may be formed by disposing the fourth tube 14 or the fifth tube 15 at an arbitrary position. Further, the second division space may be formed without charging one, two, or three of the heat storage materials A, B, C, and D.

The invention is not limited the illustration of to the combination, the scale, and the arrangement of the first to fifth tubes, and various modifications may be made as long as the effects of the invention are obtained.

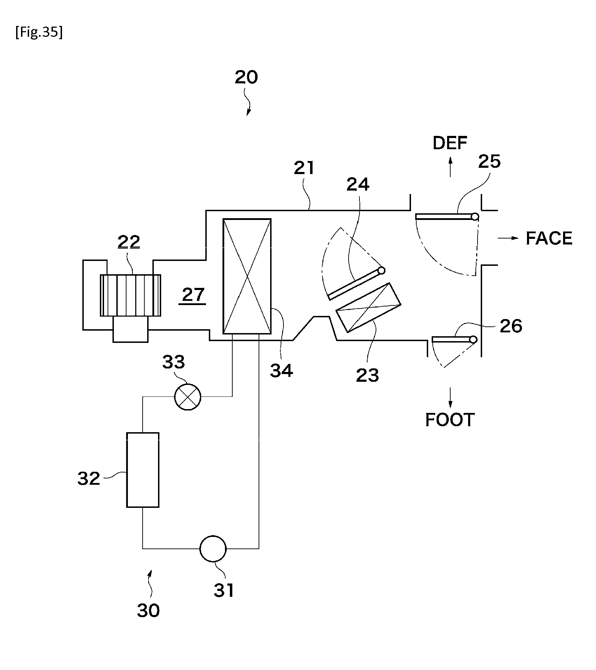

Fig. 35 is a schematic diagram illustrating an example of the vehicle air conditioning device according to the embodiment. As illustrated in Fig. 35, a vehicle air conditioning device 20 according to the embodiment includes an air stream generator 22 and a heat exchanger 34 connected to a refrigerating cycle 30 inside a casing 21 having an air passage 27 therein.

The casing 21 is a casing of HVAC (Heating, Ventilation, and Air Conditioning), and includes the air passage 27 therein. The heat exchanger 34 connected to the refrigerating cycle 30 is disposed in the air passage 27.

The heat exchanger 34 connected to the refrigerating cycle 30 is an evaporator in Fig. 35. The heat exchanger 34 is a heat exchanger mounted on the vehicle air conditioning device according to the embodiment illustrated in Figs. 16 to 26.

A heater core 23 may be disposed in the air passage 27. The heater core 23 is, for example, a hot water heater core using engine cooling water or an electric heating heater core using an electric heater. In the embodiment, the type and the structure of the heater core 23 are not limited.

The air stream generator 22 is, for example a blower, and forms an air stream in the air passage 27. In the embodiment, the type of the blower is not particularly limited. However, for example, a flow-through type such as a sirocco fan and a turbo fan, an axial flow type, or a centrifugal type may be exemplified.

For example, the air blowing into the vehicle interior is formed as below. The air stream which is formed by the air stream generator 22 passes through the heat exchanger (the evaporator) 34, and is divided into the air stream which does not pass through the heater core 23 and the air stream which passes through the heater core 23 by the switching operation of a mix door 24. The air stream which does not pass through the heater core 23 is cool air, and the air stream which passes through the heater core 23 is warm air. The amount of cool air and warm air is adjusted by the open/close angle of the mix door 24 so as to adjust the temperature of the air blowing into the vehicle interior. The air of which the temperature is adjusted is sent to a passage connected to a defroster (DEF), a passage connected to a face (FACE), or a passage connected to a foot (FOOT) by the opening/closing operation of, for example, mode doors 25 and 26 so that the air blows into the vehicle interior.

For example, the refrigerating cycle 30 includes a compressor 31, a condenser 32, an expansion valve 33, and a heat exchanger (an evaporator) 34. The cooling medium is compressed by the compressor 31 so as to become a high-temperature/high-pressure gas, and the high-temperature/high-pressure gas flows into the condenser 32. Then, the cooling medium is cooled by external air or traveling air passing through the condenser 32 so as to be condensed into a high-temperature/high-pressure liquid. Subsequently, the cooling medium is depressurized and expanded by the expansion valve 33 so as to become a low-temperature/low-pressure gas-liquid mixture, and the low-temperature/low-pressure gas-liquid mixture flows into the heat exchanger (the evaporator) 34. The cooling medium is warmed by the air stream (the air stream formed by the air stream generator 22) passing through the heat exchanger (the evaporator) 34 so as to be vaporized into a low-temperature/low-pressure gas, and the low-temperature/low-pressure gas flows into the compressor 31 again. The air which passes through the heat exchanger (the evaporator) 34 becomes cooled and dehumidified air, and is used to cool or dehumidify the inside of the vehicle interior.

The refrigerating cycle 30 may be used for a cooling/warming operation other than the cooling operation illustrated in Fig. 35. The refrigerating cycle for the cooling/warming operation is, for example, a refrigerating cycle illustrated in Fig. 1 of Patent Literature 3. In this case, the heat exchanger 34 is a heat exchanger serving as an evaporator and a heater core.

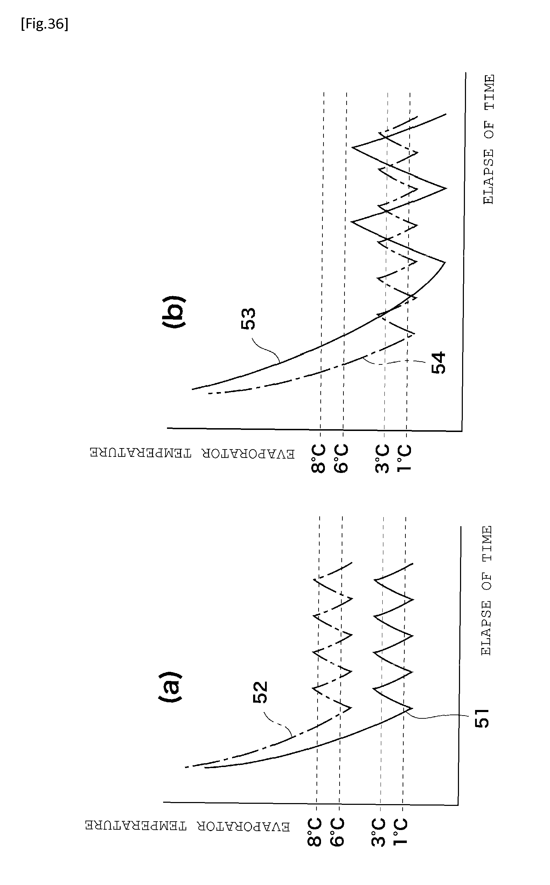

Fig. 36 is a graph illustrating a relation between a temperature and a time of a readily frozen area in the case of a fixed displacement compressor, where Fig. 36(a) is a graph illustrating a state where the heat storage material is not charged yet and Fig. 36(b) is a graph illustrating a state where the heat storage material is completely charged. As an example, Figs. 36(a) and 36(b) illustrate a case where a thermostat is disposed in the readily frozen area of the heat exchanger and the set temperature range of the thermostat is set to 1 to 3°C. The readily frozen area or the other area is determined based on the temperature distribution of the heat exchanger in a state where the heat storage material is not charged into the heat exchanger. As an example of the readily frozen area, a cooling medium inlet side area in the lamination direction of the tube, an area in which the speed of air passing through the heat exchanger is relatively slow, or an area in which the temperature of air passing through the heat exchanger is relatively low may be exemplified.

In Fig. 36(a), the line 51 indicates a change in temperature of the readily frozen area, and the line 52 indicates a change in temperature of an area (hereinafter, referred to as the hardly frozen area) other than the readily frozen area. When the heat storage material is not charged into the heat exchanger, large temperature distribution is formed after early stage of operating the refrigerating cycle since the time taken for a decrease in temperature is short in the readily frozen area (the line 51) in relation to the hardly frozen area (the line 52) as illustrated in Fig. 36(a). Even when a time elapses after the refrigerating cycle is operated, the temperature of the readily frozen area (the line 51) is the set temperature (for example, 1 to 3°C) of the thermostat, but the temperature of the hardly frozen area (the line 52) is, for example, 6 to 8°C, and as a result, the temperature distribution in the heat exchanger is not solved. Further, when the set temperature range of the thermostat is narrow (for example, 1 to 2°C) in a case where the heat storage material is not charged into the heat exchanger, the compressor 31 (illustrated in Fig. 35) is frequently turned on and off, and as a result, there is a concern that the feeling of the passenger may be degraded.

In Fig. 36(b), the line 53 indicates a change in temperature of the readily frozen area, and the line 54 indicates a change in temperature of the hardly frozen area. When the first division space charging the heat storage material is relatively densely disposed in the readily frozen area of the heat exchanger, the time taken for a decrease in temperature of the readily frozen area (the line 53) is slow as illustrated in Fig. 36(b) so that it is possible to suppress the temperature distribution from being enlarged after early stage of operating the refrigerating cycle. Further, the temperature of the hardly frozen area (the line 54) may be decreased to the set temperature (for example, 1 to 3°C) of the thermostat, and the temperature distribution of the heat exchanger may be averaged, thereby efficiently performing a cooling operation. In this way, since it is possible to prevent a part of the heat exchanger from being frozen, it is possible to promptly handle the cooling request of the passenger by decreasing the average temperature of the entire heat exchanger. Further, since the temperature distribution is not easily enlarged, it is possible to uniformly adjust the temperature of air blowing into the vehicle interior and hence to improve the feeling of the passenger.

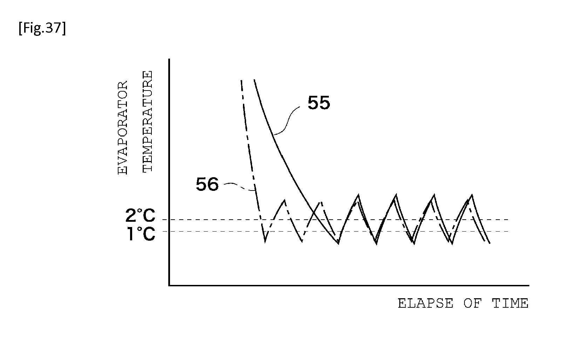

Fig. 37 is a graph illustrating an example of a relation between the temperature and the time of the readily frozen area in the case of the fixed displacement compressor when the set temperature range of the thermostat is narrow after the heat storage material is charged. In Fig. 37, the line 55 indicates a change in temperature of the readily frozen area, and the line 56 indicates a change in temperature of the hardly frozen area. As illustrated in Fig. 36(b), since the set temperature range of the thermostat is narrowed (for example, 1 to 2°C) at a position in which a change in temperature is largely increased by the latent heat of the heat storage material in the readily frozen area (the line 53), it is possible to decrease a change in temperature of the readily frozen area (the line 55) and hence to decrease a change in temperature of the entire heat exchanger as illustrated in Fig. 37.

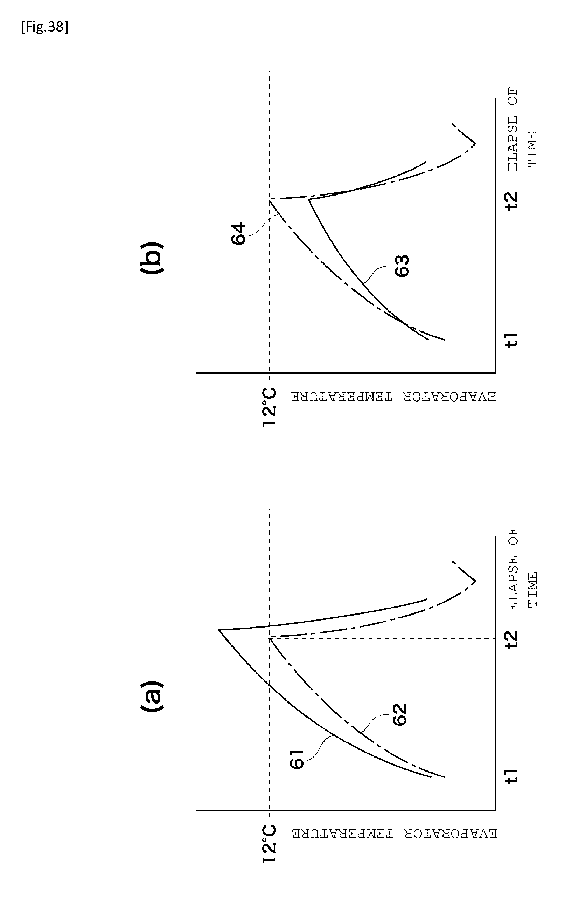

Fig. 38 is a graph illustrating an example of a relation between the temperature and the time of the readily heated area, where Fig. 38(a) is a graph illustrating a state where the heat storage material is not charged yet and Fig. 38(b) is a graph illustrating a state where the heat storage material is completely charged. The readily heated area or the other area is determined based on the temperature distribution of the heat exchanger in a state where the heat storage material is not charged into the heat exchanger. As an example of the readily heated area, an area in which the speed of air passing through the heat exchanger is relatively fast or an area in which the temperature of air passing through the heat exchanger is relatively high may be exemplified.

In Fig. 38(a), the line 61 indicates a change in temperature of the readily heated area, and the line 62 indicates a change in temperature of an area (hereinafter, referred to as the hardly heated area) other than the readily heated. When the engine is stopped at the time t1 in a case where the heat storage material is not charged into the heat exchanger, the compressor 31 of the refrigerating cycle is stopped, and the temperature of the readily heated area (the line 61) rapidly increases compared to the hardly heated area (the line 62) as illustrated in Fig. 38(a). In the evaporator 34 (illustrated in Fig. 35), it is known that a bad smell is generated when the temperature of the evaporator excessively increases (for example, 12°C or more) while condensed water is stuck to the evaporator, and hence the comfortable feeling inside the vehicle interior is degraded. When the thermostat detects a temperature in which the compressor 31 needs to be started again, the engine is started again, and the compressor 31 is operated (the time t2), and thus, the temperature of the readily heated area (the line 61) and the hardly heated area (the line 62) of the evaporator 34 decreases.

In Fig. 38(b), the line 63 indicates a change in temperature of the readily heated area, and the line 64 indicates a change in temperature of the hardly heated area. When the first division space charging the heat storage material is relatively densely disposed in the readily heated area of the heat exchanger, an increase in temperature of the readily heated area (the line 63) may be suppressed as illustrated in Fig. 38(b). As a result, it is possible to suppress a bad smell from being generated by suppressing an excessive increase in temperature of the heat exchanger when the refrigerating cycle is stopped.

In order to prevent a problem in which the comfortable feeling is degraded due to an increase in temperature of air blowing into the vehicle interior in accordance with an increase in temperature of the evaporator, control of restarting the engine may be performed when the current temperature exceeds a determination temperature (for example, 12°C); however, the temperature rapidly reaches the determination temperature in the readily heated area (the line 61) as illustrated in Fig. 38(a). Here, when the first division space charging the heat storage material is relatively densely disposed in the readily heated area at a position in which the frequency of restarting the engine increases only to prevent an increase in temperature of the evaporator, the temperature of the readily heated area (the line 63) and the hardly heated area (the line 64) may be set to the determination temperature or less as illustrated in Fig. 38(b), and the frequency of restarting the engine only for the air conditioning operation may be decreased.

As illustrated in Figs. 16 to 26, in the heat exchanger mounted on the vehicle air conditioning device according to the embodiment, the first division space which charges the heat storage material and the second division space which does not charge the heat storage material may be disposed arbitrarily. For this reason, it is possible to solve non-uniform temperature distribution by relatively densely disposing the first division space which charges the heat storage material in any one or both the readily frozen area and the readily heated area of the heat exchanger.

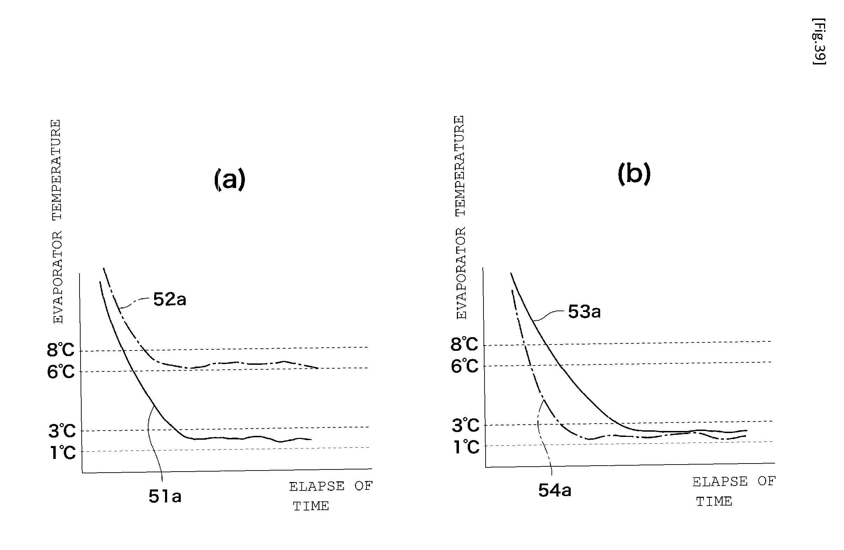

Figs. 36 and 37 illustrate an example in which the compressor 31 is of a fixed displacement type, and Fig. 39 illustrates an example in which the compressor 31 is of a variable displacement type. In Fig. 39(a), the line 51a indicates a change in temperature of the readily frozen area, and the line 52a indicates a change in temperature of the hardly frozen area. When the heat storage material is not charged into the heat exchanger, the temperature of the hardly frozen area (the line 52a) is not sufficiently decreased, and large temperature distribution is formed during the operation period of the refrigerating cycle as illustrated in Fig. 39(a).

In Fig. 39(b), the line 53a indicates a change in temperature of the readily frozen area, and the line 54a indicates a change in temperature of the hardly frozen area. When the first division space charging the heat storage material is relatively densely disposed in the readily frozen area of the heat exchanger, the refrigerating cycle is operated so as to sufficiently decrease the temperature of the readily frozen area (the line 53a) and the temperature of the hardly frozen area as illustrated in Fig. 39(b), and thus it is possible to suppress the temperature distribution from being enlarged during the operation period of the refrigerating cycle.

The heat storage material indicates a material which keeps a temperature of a contacting material at a predetermined temperature. The heat storage material is called a cold storage material when the keeping temperature is equal to or lower than a room temperature or is generally called a heat storage/cold storage material. The heat storage material of the invention includes the cold storage material and the heat storage/cold storage material. The heat storage material is, for example, a sensible heat storage material which uses specific heat, a latent heat storage material which uses a change in phase such as melting and freezing, or a chemical heat storage material which uses absorbing and generating of heat caused by a chemical reaction. Among these, it is preferable to use the latent heat storage material in that the amount of heat generated per unit mass is larger than that of the sensible heat storage material and the chemical stability is higher than that of the chemical heat storage material. The latent heat storage material is, for example, paraffin. The paraffin is a material containing a chain state hydrocarbon compound of which a general formula is CₙH₂ₙ₊₂ or a cyclic hydrocarbon compound of which a general formula is CₙH₂ₙ (here, n ≥ 3). In the embodiment, since the chemical stability of the paraffin is higher, it is preferable that the paraffin mainly contain a chain state hydrocarbon compound. The melting point (the freezing point) of the paraffin is different depending on the carbon number (the number of n in the general formula) or the carbon chain structure having a straight shape, a branched shape, or a ring shape. For this reason, it is possible to arbitrarily select paraffin having a phase change temperature in response to a target holding temperature. As a structure of disposing the heat storage materials having different phase change temperature values in the charging spaces, for example, a heat exchanger capable of conducting both a cooling operation and a warming operation may be realized by the combination of the low melting point paraffin (for example, the melting point: 3 to 10°C) and the high melting point paraffin (for example, the melting point: 77 to 85°C) having a melting point higher than the low melting point paraffin.

Figs. 27(A) and 27(B) are diagrams to describe an example of a structure without the intermediate plate among the modified examples of the first tube. The first to fifth tubes have a structure in which one intermediate plate is sandwiched between the first closing plate and the second closing plate, but the invention is not limited to this structure. As illustrated in Fig. 27, the first to fifth tubes may be a structure in which the first closing plate and the second closing plate are stuck to each other without the intermediate plate. Both the first closing plate 110A and a second closing plate 110B' illustrated in Figs. 27(A) and 27(B) correspond to the closing plate 110 of the first example illustrated in Fig. 2. Further, Figs. 27(A) and 27(B) illustrate a state where the second closing plate 110B' in which the longitudinal direction of the closing plate 110 illustrated in Fig. 2 is reversed. As illustrated in Fig. 27, the first tube is formed in a manner such that the first closing plate 110A and the second closing plate 110B are disposed so that inner surfaces 119 face each other while being reversed in the longitudinal direction illustrated in Fig. 2 and are brazed (bonded) to each other while the top portions of the peripheral walls 112 of the plates contact each other and the top portions of the partition walls 113 of the plates contact each other. Thus, the cooling medium passage 114 and the storage portions 115 and 116 are formed between the first closing plate 110A and the second closing plate 110B'. In Fig. 27, the longitudinal direction of the second closing plate 110B illustrated in Fig. 2 is reversed, but the longitudinal direction of the first closing plate 110A may be reversed. Then, the second to fifth tubes may be also formed similarly to the first tube except that the longitudinal direction of the specified first closing plate or the specified second closing plate is reversed. Since the tube does not include the intermediate plate, the tube may be decreased in weight by decreasing the amount of the material of the tube. Further, the ventilation resistance of the heat exchanger may be reduced by decreasing the thickness of the tube (the tube height).

Figs. 28(A) to 28(D) are diagrams to describe a first example of a structure with a plurality of intermediate plates among the modified examples of the first tube. As illustrated in Fig. 28, the first to fifth tubes may be a structure in which the intermediate plates are sandwiched between the first closing plate and the second closing plate. Figs. 28(A) to 28(D) illustrate a structure which includes first and second intermediate plates 210A and 210B as the intermediate plate, a first closing plate 160A, and a second closing plate 160B.

Since the first intermediate plate 210A and the second intermediate plate 210B illustrated in Figs. 28(A) to 28(D) have the same configuration, the first intermediate plate 210A will be described representatively. The first intermediate plate 210A includes a peripheral bonding surface 212 which is formed in the periphery of the plate and five partition surfaces 213 which are formed in parallel along the longitudinal direction of the plate which are formed at one surface 211a. In Fig. 28, the partition surface 213 has a linear shape (a rectangular shape) in the front view, but may be formed in an infinite shape such as a corrugated shape. Further, five partition surface 213 are provided in Fig. 28, but the invention is not limited thereto, and the number of partition surfaces may be increased or decreased. The first intermediate plate 210A includes a storage portion 214 which is a recess formed between the peripheral bonding surface 212 and the partition surface 213 or between the partition surfaces 213. The first intermediate plate 210A includes a penetration hole 217 forming a tank portion and a penetration hole 218 communicating with the storage portion 214 which are formed respectively at one end portion and the other end portion.

Since the first closing plate 160A and the second closing plate 160B illustrated in Figs. 28(A) to 28(D) have the same configuration, the first closing plate 160A will be described representatively. The first closing plate 160A includes a peripheral wall 162 which is formed in the periphery of the plate, a partition wall 163 which is formed in the longitudinal direction of the plate, a penetration hole 167 which forms the tank portion, and a penetration hole 168 which is formed at a position corresponding to each of the penetration holes 218 of the intermediate plates 210A and 210B which are formed at a surface 161 sandwiching the intermediate plate. The first closing plate 160A includes a cooling medium passage 164 which is a recess formed between the peripheral wall 162 and the partition wall 163. The cooling medium passage 164 has an area in which the entire storage portion 214 is received therein when the intermediate plates 210A and 210B overlap each other and has a depth in which the outer surface of the bottom portion of the storage portion 214 contacts the inner surface of the bottom portion of the cooling medium passage 164. Further, the first closing plate 160A further includes a concave portion 169 which is formed at a position corresponding to an end portion 213a of the partition surface 213 of each of the intermediate plates 210A and 210B in the longitudinal direction.

Fig. 29 is a broken-out section view taken along line A-A when the tube of Figs. 28(A) to 28(D) is formed. Fig. 30 is a broken-out section view taken along line B-B when the tube of Figs. 28(A) to 28(D) is formed. The first tube is formed in a manner such that one surface 211a of the first intermediate plate 210A and one surface 211a of the second intermediate plate 210B are disposed so as to face each other, the peripheral bonding surfaces 212 and the partition surfaces 213 of the plates contact each other, the top portions of the peripheral wall 162 and the partition wall 163 of the first closing plate 160A and the second closing plate 160B contact the other surfaces 211b of the first intermediate plate 210A and the second intermediate plate 210B, and the plates are brazed (bonded) to each other. Thus, as illustrated in Fig. 29, the storage portion 214 is formed between the first intermediate plate 210A and the second intermediate plate 210B, and the cooling medium passage 164 is formed between the first closing plate 160A and the first intermediate plate 210A and between the second closing plate 160B and the second intermediate plate 210B.

As illustrated in Fig. 29, since the outer surface of the bottom portion of the storage portion 214 contacts the inner surface of the bottom portion of the cooling medium passage 164 so that the cooling medium passage 164 and the storage portion 214 are alternately disposed along the side surface of the tube, it is possible to efficiently cool the outer fins by the cooling medium and the heat storage material. Further, since the concave portion 169 is provided as illustrated in Fig. 30, the cooling medium may be circulated in the cooling medium passage 164 between the storage portions 214 even in a structure in which the outer surface of the bottom portion of the storage portion 214 contacts the inner surface of the bottom portion of the cooling medium passage 164.

The second to fifth tubes may be also formed similarly to the first tube except that each of the first intermediate plate 210A and the second intermediate plate 210B is changed as a plate having a predetermined structure. As the plate having a predetermined structure in the second tube, an intermediate plate (not illustrated) is used in which the penetration hole 218 of the other end portion of each of the first intermediate plate 210A and the second intermediate plate 210B illustrated in Figs. 28(A) to 28(D) is changed as the penetration hole not communicating with the storage portion 214. As the plate having a predetermined structure in the third tube, an intermediate plate (not illustrated) is used in which the penetration hole 218 of each of one end portion and the other end portion of any one of the first intermediate plate 210A illustrated in Figs. 28(A) to 28(D) and the second intermediate plate 210B illustrated in Figs. 28(A) to 28(D) is changed as a concave portion communicating with the storage portion 214. As the plate having a predetermined structure in the fourth tube, an intermediate plate (not illustrated) is used in which the penetration hole 218 of each of one end portion and the other end portion of the first intermediate plate 210A and the second intermediate plate 210B illustrated in Figs. 28(A) to 28(D) is changed as a penetration hole not communicating with the storage portion 214. As the plate having a predetermined structure in the fifth tube, an intermediate plate (not illustrated) is used in which the penetration hole 218 of each of one end portion and the other end portion of the first intermediate plate 210A illustrated in Figs. 28(A) to 28(D) is changed as a penetration hole not communicating with the storage portion 214 and an intermediate plate (not illustrated) is used in which the penetration hole 218 of each of one end portion and the other end portion of the second intermediate plate 210B illustrated in Figs. 28(A) to 28(D) is changed as a concave portion not communicating with the storage portion 214.

Figs. 31(A) to 31(D) are diagrams to describe a second example of a structure with a plurality of intermediate plates among the modified examples of the first tube. Figs. 31(A) to 31(D) illustrate a structure which includes first and second intermediate plates 220A and 220B as the intermediate plate, a first closing plate 170A, and a second closing plate 170B.

Since the first intermediate plate 220A and the second intermediate plate 220B illustrated in Figs. 31(A) to 31(D) have the same configuration, the first intermediate plate 220A will be described representatively. The first intermediate plate 220A includes a peripheral bonding surface 222 which is provided in the periphery of the plate and five partition surfaces 223 which are formed in parallel along the longitudinal direction of the plate which are formed at one surface 221a. In Fig. 31, the partition surface 223 has a linear shape (a rectangular shape) in the front view, but may be formed in an infinite shape such as a corrugated shape. Further, five partition surfaces 223 are provided in Fig. 31, but the invention is not limited thereto, and the number of partition surfaces may be increased or decreased. The first intermediate plate 220A includes a cooling medium passage 224 which is a recess formed between the peripheral bonding surface 222 and the partition surface 223 or between the partition surfaces 223. The first intermediate plate 220A includes a penetration hole 227 and a penetration hole 228 forming a tank portion whish are formed respectively at one end portion and the other end portion.

Since the first closing plate 170A and the second closing plate 170B illustrated in Figs. 31(A) to 31(D) have the same configuration, the first closing plate 170A will be described representatively. The first closing plate 170A includes a peripheral wall 172 which is formed in the periphery of the plate, a penetration hole 177 which forms the tank portion, and a penetration hole 178 which is formed at a position corresponding to each of the penetration holes 228 of the intermediate plates 220A and 220B which are formed at a surface 171 sandwiching the intermediate plate. The first closing plate 170A includes a storage portion 174 which is a recess surrounded by the peripheral wall 172. The storage portion 174 has an area in which the entire cooling medium passage 224 is received therein when the intermediate plates 220A and 220B overlap each other and has a depth in which the outer surface of the bottom portion of the cooling medium passage 224 contacts the inner surface of the bottom portion of the storage portion 174. Further, the first closing plate 170A further includes a concave portion 179 which is formed at a position corresponding to an end portion 223a of the partition surface 223 of each of the intermediate plates 220A and 220B in the longitudinal direction. Further, the first closing plate 170A may further include a partition wall (not illustrated) which defines the storage portion 174 in the longitudinal direction.

Fig. 32 is a broken-out section view taken along line C-C when the tube of Figs. 31(A) to 31(D) is formed. Fig. 33 is a broken-out section view taken along line D-D when the tube of Figs. 31(A) to 31(D) is formed. The first tube is formed in a manner such that one surface 221a of the first intermediate plate 220A and one surface 221a of the second intermediate plate 220B are disposed so as to face each other, the peripheral bonding surfaces 222 and the partition surfaces 223 of the plates contact each other, the top portions of the peripheral walls 172 of the first closing plate 170A and the second closing plate 170B respectively contact the other surfaces 221b of the first intermediate plate 220A and the second intermediate plate 220B, and the plates are brazed (bonded) to each other. Thus, as illustrated in Fig. 32, the cooling medium passage 224 is formed between the first intermediate plate 220A and the second intermediate plate 220B, and the storage portion 174 is formed between the first closing plate 170A and the first intermediate plate 220A and between the second closing plate 170B and the second intermediate plate 220B.

As illustrated in Fig. 32, since the outer surface of the bottom portion of the cooling medium passage 224 contacts the inner surface of the bottom portion of the storage portion 174 so that the storage portion 174 and the cooling medium passage 224 are alternately disposed along the side surface of the tube, it is possible to efficiently cool the outer fins by the cooling medium and the heat storage material. Further, since the concave portion 179 is provided as illustrated in Fig. 33, the heat storage material may be circulated in the storage portion 174 between the cooling medium passages 224 in the charging step of charging the heat storage material even in a structure in which the outer surface of the bottom portion of the cooling medium passage 224 contacts the inner surface of the bottom portion of the storage portion 174.

The second to fifth tubes may be formed similarly to the first tube except that the first closing plate 170A and the second closing plate 170B are changed as a plate having a predetermined structure. As the plate having a predetermined structure in the second tube, a closing plate (not illustrated) is used in which the penetration hole 178 of the other end portion of each of the first closing plate 170A and the second closing plate 170B illustrated in Figs. 31(A) to 31(D) is changed as a penetration hole not communicating with the storage portion 174. As the plate having a predetermined structure in the third tube, a closing plate (not illustrated) is used in which the penetration hole 178 of each of one end portion and the other end portion of any one of the first closing plate 170A illustrated in Figs. 31(A) to 31(D) and the second closing plate 170B illustrated in Figs. 31(A) to 31(D) is changed as a concave portion communicating with the storage portion 174. As the plate having a predetermined structure in the fourth tube, a closing plate (not illustrated) is used in which the penetration hole 178 of each of one end portion and the other end portion of the first closing plate 170A and the second closing plate 170B illustrated in Figs. 31(A) to 31(D) is changed as a penetration hole not communicating with the storage portion 174. As the plate having a predetermined structure in the fifth tube, a closing plate (not illustrated) is used in which the penetration hole 178 of each of one end portion and the other end portion of the first closing plate 170A illustrated in Figs. 31(A) to 31(D) is changed as a penetration hole not communicating with the storage portion 174 and a closing plate (not illustrated) is used in which the penetration hole 178 of each of one end portion and the other end portion of the second closing plate 170B illustrated in Figs. 31(A) to 31(D) is changed as a concave portion not communicating with the storage portion 174.

As illustrated in Figs. 28 to 33, since the heat storage material storage portion 214 or the cooling medium passage 224 may be formed inside the intermediate plate by sticking the intermediate plates to each other, for example, as illustrated in Fig. 8, the partition wall 113 which divides the cooling medium passage 114 and the storage portions 115 and 116 does not need to be formed in the first closing plate 110A and the second closing plate 110B. For this reason, it is possible to easily change the position or the volume of each of the storage portions 214 and 174.
(III)

Fig. 1 is a schematic perspective view illustrating an example of the heat exchanger according to the embodiment. As illustrated in Fig. 1, the heat exchanger 1 includes the laminated body 4 in which the tubes 2 and the outer fins 3 are alternately laminated. The heat exchanger 1 is, for example, an evaporator, a heater core, or a heat exchanger serving as an evaporator and a heater core of a heat pump cycle.

One end portion of the tube 2 in the longitudinal direction is provided with one tank portion 5a, and the other end portion of the tube 2 in the longitudinal direction is provided with the other tank portion 5b. The tube 2 further includes a cooling medium passage (not illustrated) therein. The cooling medium passage communicates with one tank portion 5a and the other tank portion 5b. One tank portion 5a and the other tank portion 5b distribute the cooling medium to the cooling medium passages inside each tube 2 and collect the cooling medium.

Two or more tubes of the tubes 2 further include a storage portion (not illustrated) therein. The storage portion may store a heat storage material. Further, the storage portion does not communicate with the cooling medium passage.

The outer fin 3 is, for example, a corrugated type thin plate which is formed of aluminum alloy or copper alloy and is bent in a corrugated shape. The invention is not limited to the structure of the outer fin 3.

The laminated body 4 is formed by laminating the tubes 2 with the outer fin 3 interposed therebetween. In the laminated body 4, heat is transferred between the cooling medium passing through the cooling medium passage inside the tubes 2 or the heat storage material and blowing air passing through the outer fins 3. The invention is not limited to the number of the tubes 2 and the outer fins 3.

The laminated body 4 includes a plurality of charging spaces (not illustrated) which includes storage portions and does not communicate with one another. The charging spaces may be set as the spaces which charge the heat storage materials having a different phase transition temperature.

Next, the heat exchanger according to the embodiment will be described. In the heat exchanger according to the embodiment, the laminated body includes a plurality of charging spaces which includes the storage portions and does not communicate with one another, and the charging spaces include a first division space which charges the first heat storage material and a second division space which charges the second heat storage material having a phase transition temperature different from the first heat storage material.

It is preferable that the tube include at least one of the first tube 11, the second tube 12, and the third tube 13.

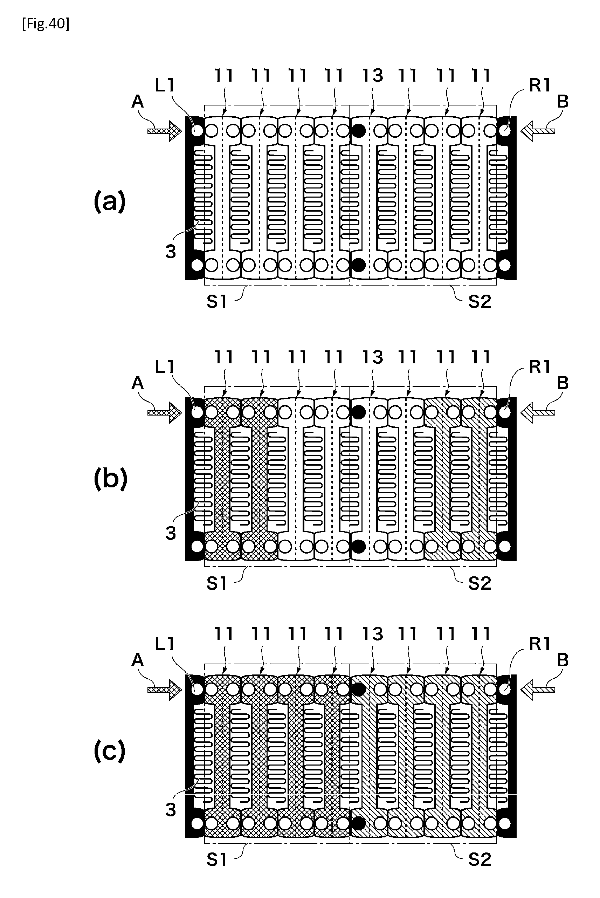

Fig. 40 is a schematic diagram illustrating a first example of a heat exchanger using a first tube and a third tube, wherein Fig. 40(a) illustrates a state where the heat storage material is not charged yet, Fig. 40(b) illustrates a state where the heat storage material is being charged, and Fig. 40(c) illustrates a state where the heat storage material is completely charged. Hereinafter, the tube lamination state will be described with reference to the schematic diagram of the tube illustrated in Figs. 11 to 15. As illustrated in Figs. 40(a) to 40(c), it is preferable that the tubes include the first tube and the third tube.

First, as illustrated in Fig. 40(a), the first tubes 11 are laminated, and one third tube 13 is disposed between the laminated first tubes 11. Thus, the charging space is divided into the space S1 which is formed by the first tubes 11 laminated at the left side of the third tube 13 and the space S2 which is formed by the third tube 13 and the first tubes 11 laminated at the right side of the third tube.

Next, as illustrated in Fig. 40(b), the first heat storage material A is charged into the space S1 from one end portion (the left upper side in Fig. 40(b)) L1 of the tube in the longitudinal direction, and the second heat storage material B having a phase transition temperature different from the first heat storage material A is charged into the space S2 from one end portion (the right upper side in Fig. 40(b)) R1 of the tube in the longitudinal direction. The invention is not limited to the heat storage material charging sequence, and may be charged in order of the space S1 and the space S2, may be charged in order of the space S2 and the space S1, or may be charged into the space S1 and the space S2 at the same time.

The invention is not limited to the heat storage material charging method. The heat storage material charging method is, for example, a method of decreasing the pressure of the charging space and charging the heat storage material into the charging space of which the pressure becomes a negative pressure. The charging space ventilation method is not particularly limited, but for example, a ventilation method using a vacuum pump may be employed. Since the pressure of the charging space is set to the negative pressure, the heat storage material may be more efficiently charged. Here, the negative pressure indicates a pressure state where the pressure is lower than the atmospheric pressure.

As illustrated in Fig. 40(c), two kinds of heat storage materials A and B having a phase transition temperature different from each other may be disposed. In addition, it is preferable to prevent the heat storage material from flowing outward by burying one end portions L1 and R1 of the tube in the longitudinal direction by the use of an adhesive after the heat storage material is charged.

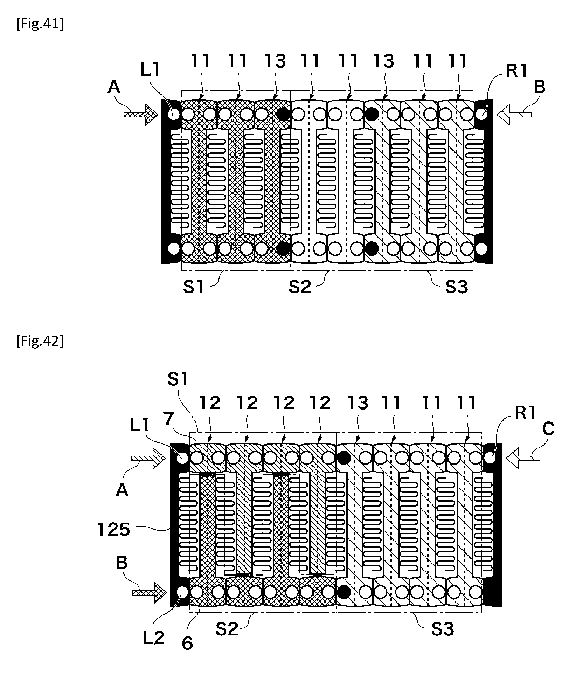

Fig. 41 is a schematic diagram illustrating a second example of a heat exchanger using a first tube and a third tube. First, as illustrated in Fig. 41, the first tubes 11 are laminated, and two third tubes 13 are disposed between the laminated first tubes 11 so as to be separated from each other. Thus, the charging space is divided into the space S1 which is formed by the third tube and the first tubes 11 laminated at the left side of the third tube 13, the space S2 which is formed by the first tube 11 laminated between two third tubes 13, and the space S3 which is formed by the third tube 13 and the first tubes 11 laminated at the right side of the third tube. Next, the first heat storage material A is charged into the space S1 from one end portion (the left upper side in Fig. 41) L1 of the tube in the longitudinal direction, and the second heat storage material B having a phase transition temperature different from the first heat storage material A is charged into the space S3 from one end portion (the right upper side in Fig. 41) R1 of the tube in the longitudinal direction. Thus, two kinds of heat storage materials A and B having a phase transition temperature different from each other may be disposed. In addition, the space S2 which does not charge the heat storage material may be disposed between the space S1 which charges the first heat storage material A and the space S3 which charges the second heat storage material B.

The invention is not limited to the heat storage material charging sequence. As the heat storage material charging sequence, the heat storage material may be charged in order of the space S1 and the space S3, may be charged in order of the space S3 and the space S1, or may be charged into the space S1 and the space S3 at the same time.

Fig. 42 is a schematic diagram illustrating a first example of a heat exchanger using a first tube, a second tube, and a third tube. As illustrated in Fig. 42, it is preferable that the tubes include the first tube 11, the second tube 12, and the third tube 13. First, as illustrated in Fig. 42, the second tubes 12 are laminated by alternately disposing the charging portion 6 and the communication portion 7, the first tubes 11 are laminated, and the third tube 13 is disposed between the second tube 12 and the first tube 11. Thus, the charging space is divided into the space S1 and the space S2 which are formed by the second tubes 12 and the space S3 which is formed by the third tube 13 and the first tubes 11. Next, the first heat storage material A is charged into the space S1 from one end portion (the left upper side in Fig. 42) L1 of the tube in the longitudinal direction, the second heat storage material B having a phase transition temperature different from the first heat storage material A is charged into the space S2 from the other end portion (the left lower side in Fig. 42) L2 of the tube in the longitudinal direction, and the third heat storage material C having a phase transition temperature different from the first heat storage material A and the second heat storage material B is charged into the space S3 from one end portion (the right upper side in Fig. 42) R1 of the tube in the longitudinal direction. Thus, three kinds of heat storage materials A, B, and C having a phase transition temperature different from each other may be disposed.

The invention is not limited to the heat storage material charging sequence. As the heat storage material charging sequence, for example, the heat storage material may be charged in order of the space S1, the space S2, and the space S3, may be charged in order of the space S2, the space S1, and the space S3, or may be charged in order of the space S3, the space S2, and the space S1, the heat storage material may be charged into one or two charging spaces of the space S1, the space S2, and the space S3 and may be changed into the remaining charging spaces, or alternatively, the heat storage material may be charged into the space S1, the space S2, and the space S3 at the same time. Further, in the heat exchanger illustrated in Fig. 42, any one of the space S1, the space S2, and the space S3 may be empty without charging the heat storage material. Further, in the heat exchanger illustrated in Fig. 42, the same heat storage material may be charged into two charging spaces selected from the space S1, the space S2, and the space S3. As a structure in which the same heat storage material is charged into two charging spaces, for example, a structure in which the first heat storage material A is charged into the space S1 and the space S3 and the second heat storage material B is charged into the space S2, a structure in which the first heat storage material A is charged into the space S2 and the space S3 and the second heat storage material B is charged into the space S1, or a structure in which the first heat storage material A is charged into the space S1 and the space S2 and the second heat storage material B is charged into the space S3 may be exemplified.

Fig. 42 illustrates a structure in which the storage portion of the space S1 and the storage portion of the space S2 are alternately disposed, but the invention is not limited thereto. When the heat exchanger illustrated in Fig. 42 is modified so that at least one of the second tubes 12 is turned upside down, belonging of the storage portion is changed to the space S2 from the space S1 or belonging of the storage portion is changed to the space S1 from the space S2. Thus, the storage portions of the spaces S1 may be disposed in a line or the storage portions of the spaces S2 may be disposed in a line.

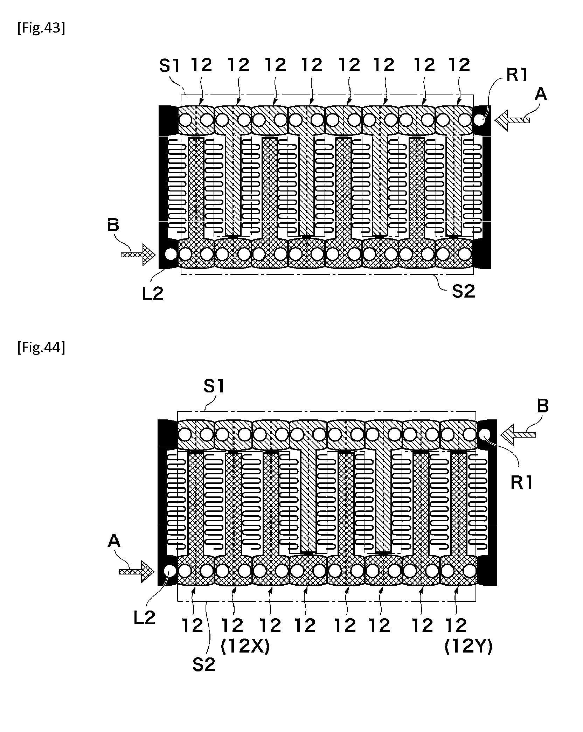

Fig. 43 is a schematic diagram illustrating a first example of a heat exchanger using a second tube. As illustrated in Fig. 43, it is preferable that the tubes include the second tube 12. First, as illustrated in Fig. 43, the second tubes 12 are laminated by alternately disposing the charging portion 6 and the communication portion 7. Thus, the charging space is divided into the space S1 and the space S2. Next, the first heat storage material A is charged into the space S1 from one end portion (the right upper side in Fig. 43) R1 of the tube in the longitudinal direction, and the second heat storage material B having a phase transition temperature different from the first heat storage material A is charged into the space S2 from the other end portion (the left lower side in Fig. 43) L2 of the tube in the longitudinal direction. Thus, two kinds of heat storage materials A and B having a phase transition temperature different from each other may be alternately disposed. The invention is not limited to the heat storage material charging sequence. As the heat storage material charging sequence, the heat storage material may be charged in order of the space S1 and the space S2, may be charged in order of the space S2 and the space S1, or may be charged into the space S1 and the space S2 at the same time.

Fig. 44 is a schematic diagram illustrating a modified example of the heat exchanger illustrated in Fig. 43. When at least one of the second tubes 12 is turned upside down, belonging of the storage portion is changed to the space S2 from the space S1 or belonging of the storage portion is changed to the space S1 from the space S2, and the storage portions of the spaces S1 may be disposed in a line or the storage portions of the spaces S2 may be disposed in a line. As an example, in the heat exchanger of Fig. 44, the tube 12X located at the second position from the left side and the rightmost tube 12Y of the heat exchanger illustrated in Fig. 43 are turned upside down. As illustrated in Fig. 44, the storage portions of the charging spaces charging the specific heat storage material (the first heat storage material A in Fig. 44) may be disposed in a line.

It is preferable that the tube further include any one of the fourth tube and the fifth tube.

Fig. 21 is a schematic diagram illustrating a first example of a heat exchanger using a first tube, a second tube, and a fifth tube. As illustrated in Fig. 21, it is desirable that the tubes include the first tube 11, the second tube 12, and the fifth tube 15. As illustrated in Fig. 21, the second tubes 12 are laminated by alternately disposing the charging portion 6 and the communication portion 7, the first tubes 11 are laminated, and the fifth tube 15 is disposed between the second tube 12 and the first tube 11. Then, the first heat storage material A is charged from one end portion (the left upper side in Fig. 21) L1 of the tube in the longitudinal direction, the second heat storage material B having a phase transition temperature different from the first heat storage material A is charged from the other end portion (the left lower side in Fig. 21) L2 of the tube in the longitudinal direction, and the third heat storage material C having a phase transition temperature different from the first heat storage material A and the second heat storage material B is charged from one end portion (the right upper side in Fig. 21) R1 of the tube in the longitudinal direction. Thus, as illustrated in Fig. 21, three kinds of heat storage materials A, B, and C having a phase transition temperature different from each other may be disposed. Further, a portion in which the heat storage material is not disposed may be formed by disposing the fifth tube 15 at an arbitrary position.

Fig. 22 is a schematic diagram illustrating a first example of a heat exchanger using a second tube and a fourth tube. As illustrated in Fig. 22, it is preferable that the tubes include the second tube 12 and the fourth tube 14. As illustrated in Fig. 22, the second tubes 12 are laminated, and the fourth tube 14 is disposed at an arbitrary position between the laminated second tubes 12. Then, the first heat storage material A is charged from the other end portion (the left lower side in Fig. 22) L2 of the tube in the longitudinal direction, and the second heat storage material B having a phase transition temperature different from the first heat storage material A is charged from one end portion (the right upper side in Fig. 21) R1 of the tube in the longitudinal direction. Thus, as illustrated in Fig. 22, two kinds of heat storage materials A and B having a phase transition temperature different from each other may be disposed. Further, a portion in which the heat storage material is not disposed may be formed by disposing the fourth tube 14 at an arbitrary position. The vertical arrangement of the charging portion 6 and the communication portion 7 of the second tube 12 and the arrangement of the fourth tube 14 are not limited to the structure illustrated in Fig. 22.

Fig. 24 is a schematic diagram illustrating a first example of a heat exchanger using a first tube, a fourth tube, and a fifth tube. As illustrated in Fig. 24, it is preferable that the tubes include the first tube 11, the fourth tube 14, and the fifth tube 15. As illustrated in Fig. 24, the first tubes 11 are laminated, and the fourth tube 14 and the fifth tube 15 are disposed at an arbitrary position between the laminated first tubes 11. Then, the first heat storage material A is charged from the other end portion (the left lower side in Fig. 24) L2 of the tube in the longitudinal direction, and the second heat storage material B having a phase transition temperature different from the first heat storage material A is charged from one end portion (the right upper side in Fig. 24) R1 of the tube in the longitudinal direction. Thus, as illustrated in Fig. 24, two kinds of heat storage materials A and B having a phase transition temperature different from each other may be disposed. Further, a portion in which the heat storage material is not disposed may be formed by disposing the fourth tube 14 or the fifth tube 15 at an arbitrary position.

Fig. 25 is a schematic diagram illustrating a first example of a heat exchanger using a first tube, a third tube, and a fourth tube. As illustrated in Fig. 25, it is preferable that the tubes include the first tube 11, the third tube 13, and the fourth tube 14. As illustrated in Fig. 25, the first tubes 11 are laminated, and the third tube 13 and the fourth tube 14 are disposed at an arbitrary position between the laminated first tubes 11. Then, the first heat storage material A is charged from the other end portion (the left upper side in Fig. 25) L1 of the tube in the longitudinal direction, and the second heat storage material B having a phase transition temperature different from the first heat storage material A is charged from one end portion (the right upper side in Fig. 25) R1 of the tube in the longitudinal direction. Thus, as illustrated in Fig. 25, two kinds of heat storage materials A and B having a phase transition temperature different from each other may be disposed. Further, a portion in which the heat storage material is not disposed may be formed by disposing the fourth tube 14 at an arbitrary position.

Fig. 26 is a schematic diagram illustrating a first example of a heat exchanger using a second tube, a fourth tube, and a fifth tube. As illustrated in Fig. 26, it is preferable that the tubes include the second tube 12, the fourth tube 14, and the fifth tube 15. As illustrated in Fig. 26, the second tubes 12 are laminated, and the fourth tube 14 and the fifth tube 15 are disposed at an arbitrary position between the laminated second tubes 12. Then, the first heat storage material A is charged from the other end portion (the left upper side in Fig. 26) L1 of the tube in the longitudinal direction, the second heat storage material B having a phase transition temperature different from the first heat storage material A is charged from the other end portion (the right upper side in Fig. 26) R1 of the tube in the longitudinal direction, the third heat storage material C having a phase transition temperature different from the first heat storage material A and the second heat storage material B is charged from one end portion (the left lower side in Fig. 26) L2 of the tube in the longitudinal direction, and the fourth heat storage material D having a phase transition temperature different from the first heat storage material A, the second heat storage material B, and the third heat storage material C is charged from one end portion (the right lower side in Fig. 26) R2 of the tube in the longitudinal direction. Thus, as illustrated in Fig. 26, four kinds of heat storage materials A, B, C, and D having a phase transition temperature different from each other may be disposed. Further, a portion in which the heat storage material is not disposed may be formed by disposing the fourth tube 14 or the fifth tube 15 at an arbitrary position.

The invention is not limited the illustration of to the combination, the scale, and the arrangement of the first to fifth tubes, and various modifications may be made as long as the effects of the invention are obtained.

The heat storage material indicates a material which keeps a temperature of a contacting material at a predetermined temperature. The heat storage material is called a cold storage material when the keeping temperature is equal to or lower than a room temperature or is generally called a heat storage/cold storage material. The heat storage material of the invention includes the cold storage material and the heat storage/cold storage material. The heat storage material is, for example, a sensible heat storage material which uses specific heat, a latent heat storage material which uses a phase transition such as melting and freezing, or a chemical heat storage material which uses absorbing and generating of heat caused by a chemical reaction. Among these, it is preferable to use the latent heat storage material in that the amount of heat generated per unit mass is larger than that of the sensible heat storage material and the chemical stability is higher than that of the chemical heat storage material. The latent heat storage material is, for example, paraffin. The paraffin is a material containing a chain state hydrocarbon compound of which a general formula is CₙH₂ₙ₊₂ or a cyclic hydrocarbon compound of which a general formula is CₙH₂ₙ (here, n ≥ 3). In the embodiment, since the chemical stability of the paraffin is higher, it is preferable that the paraffin mainly contain a chain state hydrocarbon compound. The melting point (the freezing point) of the paraffin is different depending on the carbon number (the number of n in the general formula) or the carbon chain structure having a straight shape, a branched shape, or a ring shape. For this reason, it is possible to arbitrarily select paraffin having a phase transition temperature in response to a target holding temperature. As the heat storage materials having a different phase transition temperature, for example, the phase transition temperature of the first heat storage material is higher than the phase transition temperature of the second heat storage material or the phase transition temperature of the first heat storage material is lower than the phase transition temperature of the second heat storage material.

Next, several examples in which the heat storage materials having a different phase transition temperature are disposed in a plurality of the charging spaces will be described. As a first example, the heat exchanger is a heat exchanger serving as an evaporator and a heater used in a heat pump cycle, the first heat storage material is a heat storage material having a phase transition temperature higher than the operation range (the temperature range in which the heat exchanger is controlled as the evaporator) of the evaporator, and the second heat storage material is a heat storage material having a phase transition temperature lower than the operation range (the temperature range in which the heat exchanger is controlled as the heater) of the heater. The first heat storage material is, for example, paraffin having a melting point of 7 to 11°C, and the second heat storage material is, for example, paraffin having a melting point of 50 to 60°C. In the cooling operation, the comfortable feeling inside the vehicle interior may be maintained by causing the temperature increase speed of the heat exchanger to be slow. Further, in the warming operation, the comfortable feeling inside the vehicle interior may be maintained by causing the temperature decrease speed of the heat exchanger to be slow.

As a second example, in a case where the refrigerating cycle connected to the heat exchanger includes a variable displacement compressor, the first heat storage material is a heat storage material having a phase transition temperature higher than the temperature of the evaporator when the amount of the cooling medium discharged from the compressor is large, and the second heat storage material is a heat storage material having a phase transition temperature lower than the temperature of the evaporator when the amount of the cooling medium discharged from the compressor is small. The first heat storage material is, for example, paraffin having a melting point of 3 to 10°C, and the second heat storage material is, for example, paraffin having a melting point of 8 to 14°C. Since it is possible to prevent a decrease in temperature of the heat exchanger until the latent heat is completely accumulated by the first heat storage material and the second heat storage material when the amount of the cooling medium discharged from the compressor is large, it is possible to suppress an excessive decrease in temperature of the evaporator. Further, since it is possible to prevent an increase in temperature of the heat exchanger until the latent heat accumulated by the second heat storage material is completely radiated when the amount of the cooling medium discharged from the compressor is small, it is possible to suppress an excessive increase in temperature of the evaporator. According to such behavior, it is possible to maintain the temperature of the heat exchanger within a uniform range even when the amount of the cooling medium discharged from the compressor changes.

As a third example, in a case where the heat exchanger is mounted on the vehicle of which the engine is stopped during stoppage of a vehicle, the first heat storage material is a heat storage material having a phase transition temperature higher than the temperature of the evaporator when the operation time of the engine is long, and the second heat storage material is a heat storage material having a phase transition temperature lower than the temperature of the evaporator when the operation time of the engine is short. The first heat storage material is, for example, paraffin having a melting point of 3 to 10°C, and the second heat storage material is, for example, paraffin having a melting point of 8 to 14°C. When the operation time of the engine is long, the phase transition of the first heat storage material occurs as well as the phase transition of the second heat storage material, and hence large latent heat may be accumulated. Thus, even when the operation of the compressor is stopped in accordance with the stop of the engine, the temperature increase speed of the heat exchanger may be made sufficiently slow. Further, since the phase transition of the second heat storage material occurs even when the operation time of the engine is short, the latent heat may be accumulated, and hence the temperature increase speed of the heat exchanger may be made slow. According to such behavior, even when the operation time of the engine changes, the cooling action of the air conditioning air is maintained, and hence degradation in the cooling feeling may be suppressed.

As a fourth example, in the system that saves power by arbitrarily changing the operation rate of the compressor by the use of, for example, the variable thermostat, the first heat storage material is a heat storage material of which the phase transition does not occur at the temperature of the evaporator when the set temperature of the thermostat is high and the phase transition occurs at the temperature of the evaporator when the set temperature of the thermostat is low, and the second heat storage material is a heat storage material of which the phase transition occurs at the temperature of the evaporator when the set temperature of the thermostat is high. The first heat storage material is, for example, paraffin having a melting point of 2 to 5°C, and the second heat storage material is, for example, paraffin having a melting point of 10 to 16°C. When the set temperature of the thermostat is low, the phase transition of the first heat storage material occurs as well as the phase transition of the second heat storage material, and hence large latent heat may be accumulated. Accordingly, even when the operation of the compressor is stopped in accordance with the stop of the engine, the temperature increase speed of the heat exchanger may be made sufficiently slow. Further, since the phase transition of the second heat storage material occurs even when the set temperature of the thermostat is high, the latent heat may be accumulated, and hence the temperature increase speed of the heat exchanger may be made slow. According to such behavior, even when the system is operated so as to save power by adjusting the set value of the variable thermostat so as to decrease the operation rate of the compressor, the cooling action of the air conditioning air is maintained, and hence degradation in the cooling feeling may be suppressed.

Figs. 27(A) and 27(B) are diagrams to describe an example of a structure without the intermediate plate among the modified examples of the first tube. The first to fifth tubes have a structure in which one intermediate plate is sandwiched between the first closing plate and the second closing plate, but the invention is not limited to this structure. As illustrated in Fig. 27, the first to fifth tubes may be a structure in which the first closing plate and the second closing plate are stuck to each other without the intermediate plate. Both the first closing plate 110A and a second closing plate 110B' illustrated in Figs. 27(A) and 27(B) correspond to the closing plate 110 of the first example illustrated in Fig. 2. Further, Figs. 27(A) and 27(B) illustrate a state where the second closing plate 110B' in which the longitudinal direction of the closing plate 110 illustrated in Fig. 2 is reversed. As illustrated in Fig. 27, the first tube is formed in a manner such that the first closing plate 110A and the second closing plate 110B are disposed so that inner surfaces 119 face each other while being reversed in the longitudinal direction illustrated in Fig. 2 and are brazed (bonded) to each other while the top portions of the peripheral walls 112 of the plates contact each other and the top portions of the partition walls 113 of the plates contact each other. Thus, the cooling medium passage 114 and the storage portions 115 and 116 are formed between the first closing plate 110A and the second closing plate 110B'. In Fig. 27, the longitudinal direction of the second closing plate 110B illustrated in Fig. 2 is reversed, but the longitudinal direction of the first closing plate 110A may be reversed. Then, the second to fifth tubes may be also formed similarly to the first tube except that the longitudinal direction of the specified first closing plate or the specified second closing plate is reversed. Since the tube does not include the intermediate plate, the tube may be decreased in weight by decreasing the amount of the material of the tube. Further, the ventilation resistance of the heat exchanger may be reduced by decreasing the thickness of the tube (the tube height).

Figs. 28(A) to 28(D) are diagrams to describe a first example of a structure with a plurality of intermediate plates among the modified examples of the first tube. As illustrated in Fig. 28, the first to fifth tubes may be a structure in which the intermediate plates are sandwiched between the first closing plate and the second closing plate. Figs. 28(A) to 28(D) illustrate a structure which includes first and second intermediate plates 210A and 210B as the intermediate plate, a first closing plate 160A, and a second closing plate 160B.

Since the first intermediate plate 210A and the second intermediate plate 210B illustrated in Figs. 28(A) to 28(D) have the same configuration, the first intermediate plate 210A will be described representatively. The first intermediate plate 210A includes a peripheral bonding surface 212 which is formed in the periphery of the plate and five partition surfaces 213 which are formed in parallel along the longitudinal direction of the plate which are formed so at surface 211a. In Fig. 28, the partition surface 213 has a linear shape (a rectangular shape) in the front view, but may be formed in an infinite shape such as a corrugated shape. Further, five partition surface 213 are provided in Fig. 28, but the invention is not limited thereto, and the number of partition surfaces may be increased or decreased. The first intermediate plate 210A includes a storage portion 214 which is a recess formed between the peripheral bonding surface 212 and the partition surface 213 or between the partition surfaces 213. The first intermediate plate 210A includes a penetration hole 217 forming a tank portion and a penetration hole 218 communicating with the storage portion 214 which are formed respectively at one end portion and the other end portion.

Since the first closing plate 160A and the second closing plate 160B illustrated in Figs. 28(A) to 28(D) have the same configuration, the first closing plate 160A will be described representatively. The first closing plate 160A includes a peripheral wall 162 which is formed in the periphery of the plate, a partition wall 163 which is formed in the longitudinal direction of the plate, a penetration hole 167 which forms the tank portion, and a penetration hole 168 which is formed at a position corresponding to each of the penetration holes 218 of the intermediate plates 210A and 210B which are formed at a surface 161 sandwiching the intermediate plate. The first closing plate 160A includes a cooling medium passage 164 which is a recess formed between the peripheral wall 162 and the partition wall 163. The cooling medium passage 164 has an area in which the entire storage portion 214 is received therein when the intermediate plates 210A and 210B overlap each other and has a depth in which the outer surface of the bottom portion of the storage portion 214 contacts the inner surface of the bottom portion of the cooling medium passage 164. Further, the first closing plate 160A further includes a concave portion 169 which is formed at a position corresponding to an end portion 213a of the partition surface 213 of each of the intermediate plates 210A and 210B in the longitudinal direction.

Fig. 29 is a broken-out section view taken along line A-A when the tube of Figs. 28(A) to 28(D) is formed. Fig. 30 is a broken-out section view taken along line B-B when the tube of Figs. 28(A) to 28(D) is formed. The first tube is formed in a manner such that one surface 211a of the first intermediate plate 210A and one surface 211a of the second intermediate plate 210B are disposed so as to face each other, the peripheral bonding surfaces 212 and the partition surfaces 213 of the plates contact each other, the top portions of the peripheral wall 162 and the partition wall 163 of the first closing plate 160A and the second closing plate 160B contact the other surfaces 211b of the first intermediate plate 210A and the second intermediate plate 210B, and the plates are brazed (bonded) to each other. Thus, as illustrated in Fig. 29, the storage portion 214 is formed between the first intermediate plate 210A and the second intermediate plate 210B, and the cooling medium passage 164 is formed between the first closing plate 160A and the first intermediate plate 210A and between the second closing plate 160B and the second intermediate plate 210B.

As illustrated in Fig. 29, since the outer surface of the bottom portion of the storage portion 214 contacts the inner surface of the bottom portion of the cooling medium passage 164 so that the cooling medium passage 164 and the storage portion 214 are alternately disposed along the side surface of the tube, it is possible to efficiently cool the outer fins by the cooling medium and the heat storage material. Further, since the concave portion 169 is provided as illustrated in Fig. 30, the cooling medium may be circulated in the cooling medium passage 164 between the storage portions 214 even in a structure in which the outer surface of the bottom portion of the storage portion 214 contacts the inner surface of the bottom portion of the cooling medium passage 164.

The second to fifth tubes may be also formed similarly to the first tube except that each of the first intermediate plate 210A and the second intermediate plate 210B is changed as a plate having a predetermined structure. As the plate having a predetermined structure in the second tube, an intermediate plate (not illustrated) is used in which the penetration hole 218 of the other end portion of each of the first intermediate plate 210A and the second intermediate plate 210B illustrated in Figs. 28(A) to 28(D) is changed as the penetration hole not communicating with the storage portion 214. As the plate having a predetermined structure in the third tube, an intermediate plate (not illustrated) is used in which the penetration hole 218 of each of one end portion and the other end portion of any one of the first intermediate plate 210A illustrated in Figs. 28(A) to 28(D) and the second intermediate plate 210B illustrated in Figs. 28(A) to 28(D) is changed as a concave portion communicating with the storage portion 214. As the plate having a predetermined structure in the fourth tube, an intermediate plate (not illustrated) is used in which the penetration hole 218 of each of one end portion and the other end portion of the first intermediate plate 210A and the second intermediate plate 210B illustrated in Figs. 28(A) to 28(D) is changed as a penetration hole not communicating with the storage portion 214. As the plate having a predetermined structure in the fifth tube, an intermediate plate (not illustrated) is used in which the penetration hole 218 of each of one end portion and the other end portion of the first intermediate plate 210A illustrated in Figs. 28(A) to 28(D) is changed as a penetration hole not communicating with the storage portion 214 and an intermediate plate (not illustrated) is used in which the penetration hole 218 of each of one end portion and the other end portion of the second intermediate plate 210B illustrated in Figs. 28(A) to 28(D) is changed as a concave portion not communicating with the storage portion 214.

Figs. 31(A) to 31(D) are diagrams to describe a second example of a structure with a plurality of intermediate plates among the modified examples of the first tube. Figs. 31(A) to 31(D) illustrate a structure which includes first and second intermediate plates 220A and 220B as the intermediate plate, a first closing plate 170A, and a second closing plate 170B.

Since the first intermediate plate 220A and the second intermediate plate 220B illustrated in Figs. 31(A) to 31(D) have the same configuration, the first intermediate plate 220A will be described representatively. The first intermediate plate 220A includes a peripheral bonding surface 222 which is provided in the periphery of the plate and five partition surfaces 223 which are formed in parallel along the longitudinal direction of the plate which are formed at one surface 221a. In Fig. 31, the partition surface 223 has a linear shape (a rectangular shape) in the front view, but may be formed in an infinite shape such as a corrugated shape. Further, five partition surfaces 223 are provided in Fig. 31, but the invention is not limited thereto, and the number of partition surfaces may be increased or decreased. The first intermediate plate 220A includes a cooling medium passage 224 which is a recess formed between the peripheral bonding surface 222 and the partition surface 223 or between the partition surfaces 223. The first intermediate plate 220A includes a penetration hole 227 and a penetration hole 228 forming a tank portion whish are formed respectively at one end portion and the other end portion.

Since the first closing plate 170A and the second closing plate 170B illustrated in Figs. 31(A) to 31(D) have the same configuration, the first closing plate 170A will be described representatively. The first closing plate 170A includes a peripheral wall 172 which is formed in the periphery of the plate, a penetration hole 177 which forms the tank portion, and a penetration hole 178 which is formed at a position corresponding to each of the penetration holes 228 of the intermediate plates 220A and 220B which are formed at a surface 171 sandwiching the intermediate plate. The first closing plate 170A includes a storage portion 174 which is a recess surrounded by the peripheral wall 172. The storage portion 174 has an area in which the entire cooling medium passage 224 is received therein when the intermediate plates 220A and 220B overlap each other and has a depth in which the outer surface of the bottom portion of the cooling medium passage 224 contacts the inner surface of the bottom portion of the storage portion 174. Further, the first closing plate 170A further includes a concave portion 179 which is formed at a position corresponding to an end portion 223a of the partition surface 223 of each of the intermediate plates 220A and 220B in the longitudinal direction. Further, the first closing plate 170A may further include a partition wall (not illustrated) which defines the storage portion 174 in the longitudinal direction.

Fig. 32 is a broken-out section view taken along line C-C when the tube of Figs. 31(A) to 31(D) is formed. Fig. 33 is a broken-out section view taken along line D-D when the tube of Figs. 31(A) to 31(D) is formed. The first tube is formed in a manner such that one surface 221a of the first intermediate plate 220A and one surface 221a of the second intermediate plate 220B are disposed so as to face each other, the peripheral bonding surfaces 222 and the partition surfaces 223 of the plates contact each other, the top portions of the peripheral walls 172 of the first closing plate 170A and the second closing plate 170B respectively contact the other surfaces 221b of the first intermediate plate 220A and the second intermediate plate 220B, and the plates are brazed (bonded) to each other. Thus, as illustrated in Fig. 32, the cooling medium passage 224 is formed between the first intermediate plate 220A and the second intermediate plate 220B, and the storage portion 174 is formed between the first closing plate 170A and the first intermediate plate 220A and between the second closing plate 170B and the second intermediate plate 220B.

As illustrated in Fig. 32, since the outer surface of the bottom portion of the cooling medium passage 224 contacts the inner surface of the bottom portion of the storage portion 174 so that the storage portion 174 and the cooling medium passage 224 are alternately disposed along the side surface of the tube, it is possible to efficiently cool the outer fins by the cooling medium and the heat storage material. Further, since the concave portion 179 is provided as illustrated in Fig. 33, the heat storage material may be circulated in the storage portion 174 between the cooling medium passages 224 in the charging step of charging the heat storage material even in a structure in which the outer surface of the bottom portion of the cooling medium passage 224 contacts the inner surface of the bottom portion of the storage portion 174.

The second to fifth tubes may be formed similarly to the first tube except that the first closing plate 170A and the second closing plate 170B are changed as a plate having a predetermined structure. As the plate having a predetermined structure in the second tube, a closing plate (not illustrated) is used in which the penetration hole 178 of the other end portion of each of the first closing plate 170A and the second closing plate 170B illustrated in Figs. 31(A) to 31(D) is changed as a penetration hole not communicating with the storage portion 174. As the plate having a predetermined structure in the third tube, a closing plate (not illustrated) is used in which the penetration hole 178 of each of one end portion and the other end portion of any one of the first closing plate 170A illustrated in Figs. 31(A) to 31(D) and the second closing plate 170B illustrated in Figs. 31(A) to 31(D) is changed as a concave portion communicating with the storage portion 174. As the plate having a predetermined structure in the fourth tube, a closing plate (not illustrated) is used in which the penetration hole 178 of each of one end portion and the other end portion of the first closing plate 170A and the second closing plate 170B illustrated in Figs. 31(A) to 31(D) is changed as a penetration hole not communicating with the storage portion 174. As the plate having a predetermined structure in the fifth tube, a closing plate (not illustrated) is used in which the penetration hole 178 of each of one end portion and the other end portion of the first closing plate 170A illustrated in Figs. 31(A) to 31(D) is changed as a penetration hole not communicating with the storage portion 174 or a closing plate (not illustrated) is used in which the penetration hole 178 of each of one end portion and the other end portion of the second closing plate 170B illustrated in Figs. 31(A) to 31(D) is changed as a concave portion not communicating with the storage portion 174.

As illustrated in Figs. 28 to 33, since the heat storage material storage portion 214 or the cooling medium passage 224 may be formed inside the intermediate plate by sticking the intermediate plates to each other, for example, as illustrated in Fig. 8, the partition wall 113 which divides the cooling medium passage 114 and the storage portions 115 and 116 does not need to be formed in the first closing plate 110A and the second closing plate 110B. For this reason, it is possible to easily change the position or the volume of each of the storage portions 214 and 174.

### Reference Signs List

1: Heat exchanger
2: Tube
3: Outer fin
4: Laminated body
5a: One tank portion
5b: Other tank portion
6: Charging portion
7: Communication portion
8: First closing portion
9: Second closing portion
11: First tube
12: Second tube
13: Third tube
14: Fourth tube
15: Fifth tube
20: Vehicle air conditioning device
21: Casing
22: Air stream generator
23: Heater core
24: Mix door
25, 26: Mode door
27: Air passage
30: Refrigerating cycle
31: Compressor
32: Condenser
33: Expansion valve
34: Heat exchanger
51, 51a, 52, 52a, 53, 53a, 54, 54a, 55, 56, 61, 62, 63, 64: Line
110: Closing plate of first example
110A: First closing plate
110B, 110B': Second closing plate
111: Surface sandwiching intermediate plate
112: Peripheral wall
113 (113a, 113b): Partition wall
114: Cooling medium passage
114A: First cooling medium passage
114B: Second cooling medium passage
115: Center storage portion
115A: First center storage portion
115B: Second center storage portion
116: End storage portion
116A: First end storage portion
116B: Second end storage portion
117: Penetration hole
118, 128: Penetration hole
119: Inner surface
120: Closing plate of second example
125: Center storage portion
130: Closing plate of third example
135: Center storage portion
138: Concave portion
140: Closing plate of fourth example
145: Center storage portion
150: Closing plate of fifth example
155: Center storage portion
158: Concave portion
160A: First closing plate
160B: Second closing plate
161: Surface sandwiching intermediate plate
162: Peripheral wall
163: Partition wall
164: Cooling medium passage
167: Penetration hole
168: Penetration hole
169: Concave portion
170A: First closing plate
170B: Second closing plate
171: Surface sandwiching intermediate plate
172: Peripheral wall
174: Storage portion
177: Penetration hole
178: Penetration hole
179: Concave portion
200: Intermediate plate
201: First hole
202: Second hole
203: Third hole
204: Fourth hole
207, 208: Penetration hole
210A: First intermediate plate
210B: Second intermediate plate
211a: One surface
211b: Other surface
212: Peripheral bonding surface
213: Partition surface
213a: End portion of partition surface in longitudinal direction
214: Storage portion
217: Penetration hole
218: Penetration hole
220A: First intermediate plate
220B: Second intermediate plate
221a: One surface
221b: Other surface
222: Peripheral bonding surface
223: Partition surface
223a: End portion of partition surface in longitudinal direction
224: Cooling medium passage
227: Penetration hole
228: Penetration hole

## Claims

1. A heat exchanger for vehicle air conditioning comprising:
a laminated body which is obtained by alternately laminating tubes and outer fins,
wherein each tube has a structure obtained by bonding a first closing plate and a second closing plate to each other or a structure obtained by sandwiching at least one intermediate plate between the first closing plate and the second closing plate,
wherein one end portion of the tube in the longitudinal direction is provided with one tank portion,
wherein the other end portion of the tube in the longitudinal direction is provided with the other tank portion,
wherein the tube includes a cooling medium passage which causes the one tank portion and the other tank portion to communicate with each other,
wherein two or more tubes include storage portions which store a heat storage material and do not communicate with the cooling medium passage,
wherein the laminated body includes a plurality of charging spaces which includes the storage portions and does not communicate with one another, and
wherein the charging spaces include a first division space which charges the heat storage material and a second division space which does not charge the heat storage material.

2. The heat exchanger according to claim 1,
wherein the tubes include at least one of a first tube which includes a charging portion provided at one end portion and the other end portion so as to communicate with the storage portion and to communicate with both adjacent laminated tubes, a second tube which includes a charging portion provided at any one of one end portion and the other end portion so as to communicate with the storage portion and to communicate with both adjacent laminated tubes and includes a communication portion provided at an end portion opposite to the end portion having the charging portion so as not to communicate with the storage portion and to communicate with both adjacent laminated tubes, and a third tube which includes a first closing portion provided at one end portion and the other end portion so as to communicate with the storage portion and not to communicate with only one of both adjacent laminated tubes.

3. The heat exchanger according to claim 2,
wherein the tubes include the first tube and the third tube.

4. The heat exchanger according to claim 2,
wherein the tubes include the first tube, the second tube, and the third tube.

5. The heat exchanger according to claim 2,
wherein the tubes are the second tube.

6. The heat exchanger according to any one of claims 2 to 5,
wherein the tubes further include at least one of a fourth tube which includes a communication portion provided at one end portion and the other end portion so as not to communicate with the storage portion and to communicate with both adjacent laminated tubes and in which the storage portion becomes a hermetic space so that the heat storage material is not charged therein or the storage portion is not provided, and a fifth tube which includes a second closing portion provided at one end portion and the other end portion so as not to communicate with the storage portion and not to communicate with only one of both adjacent laminated tubes and in which the storage portion becomes a hermetic space so that the heat storage material is not charged therein or the storage portion is not provided.

7. The heat exchanger according to claim 6,
wherein the tubes include the first tube, the second tube, and the fifth tube.

8. The heat exchanger according to claim 6,
wherein the tubes include the second tube and the fourth tube.

9. The heat exchanger according to claim 6,
wherein the tubes include the first tube and the fourth tube.

10. The heat exchanger according to claim 6,
wherein the tubes include the first tube, the fourth tube, and the fifth tube.

11. The heat exchanger according to claim 6,
wherein the tubes include the first tube, the third tube, and the fourth tube.

12. The heat exchanger according to claim 6,
wherein the tubes include the second tube, the fourth tube, and the fifth tube.

13. A vehicle air conditioning device comprising:
an air stream generator and a heat exchanger connected to a refrigerating cycle inside a casing having an air passage formed therein,
wherein the heat exchanger includes a laminated body which is obtained by alternately laminating tubes and outer fins,
wherein each tube has a structure obtained by bonding a first closing plate and a second closing plate to each other or a structure obtained by sandwiching at least one intermediate plate between the first closing plate and the second closing plate,
wherein one end portion of the tube in the longitudinal direction is provided with one tank portion,
wherein the other end portion of the tube in the longitudinal direction is provided with the other tank portion,
wherein the tube includes a cooling medium passage which causes the one tank portion and the other tank portion to communicate with each other,
wherein two or more tubes include storage portions which store a heat storage material and do not communicate with the cooling medium passage,
wherein the laminated body includes a plurality of charging spaces which includes the storage portions and does not communicate with one another,
wherein the charging spaces include a first division space which charges the heat storage material and a second division space which does not charge the heat storage material, and
wherein the first division space is relatively densely disposed in any one or both a readily frozen area and a readily heated area of the heat exchanger.

14. The vehicle air conditioning device according to claim 13,
wherein the tubes include at least one of a first tube which includes a charging portion provided at one end portion and the other end portion so as to communicate with the storage portion and to communicate with both adjacent laminated tubes, a second tube which includes a charging portion provided at any one of one end portion and the other end portion so as to communicate with the storage portion and to communicate with both adjacent laminated tubes and includes a communication portion provided at an end portion opposite to the end portion having the charging portion so as not to communicate with the storage portion and to communicate with both adjacent laminated tubes, and a third tube which includes a first closing portion provided at one end portion and the other end portion so as to communicate with the storage portion and not to communicate with only one of both adjacent laminated tubes.

15. The vehicle air conditioning device according to claim 14,
wherein the tubes include the first tube and the third tube.

16. The vehicle air conditioning device according to claim 14,
wherein the tubes include the first tube, the second tube, and the third tube.

17. The vehicle air conditioning device according to claim 14,
wherein the tubes are the second tube.

18. The vehicle air conditioning device according to any one of claims 14 to 17,
wherein the tube further includes at least one of a fourth tube which includes a communication portion provided at one end portion and the other end portion so as not to communicate with the storage portion and to communicate with both adjacent laminated tubes and in which the storage portion becomes a hermetic space so that the heat storage material is not charged therein or the storage portion is not provided and a fifth tube which includes a second closing portion provided at one end portion and the other end portion so as not to communicate with the storage portion and not to communicate with only one of both adjacent laminated tubes and in which the storage portion becomes a hermetic space so that the heat storage material is not charged therein or the storage portion is not provided.

19. The vehicle air conditioning device according to claim 18,
wherein the tubes include the first tube, the second tube, and the fifth tube.

20. The vehicle air conditioning device according to claim 18,
wherein the tubes include the second tube and the fourth tube.

21. The vehicle air conditioning device according to claim 18,
wherein the tubes include the first tube and the fourth tube.

22. The vehicle air conditioning device according to claim 18,
wherein the tubes include the first tube, the fourth tube, and the fifth tube.

23. The vehicle air conditioning device according to claim 18,
wherein the tubes include the first tube, the third tube, and the fourth tube.

24. The vehicle air conditioning device according to claim 18,
wherein the tubes include the second tube, the fourth tube, and the fifth tube.

25. A heat exchanger for vehicle air conditioning comprising:
a laminated body which is obtained by alternately laminating tubes and outer fins,
wherein each tube has a structure obtained by bonding a first closing plate and a second closing plate to each other or a structure obtained by sandwiching at least one intermediate plate between the first closing plate and the second closing plate,
wherein one end portion of the tube in the longitudinal direction is provided with one tank portion,
wherein the other end portion of the tube in the longitudinal direction is provided with the other tank portion,
wherein the tube includes a cooling medium passage which causes the one tank portion and the other tank portion to communicate with each other,
wherein two or more tubes include storage portions which store a heat storage material and do not communicate with the cooling medium passage,
wherein the laminated body includes a plurality of charging spaces which includes the storage portions and does not communicate with one another, and
wherein the charging spaces include a first division space which charges a first heat storage material and a second division space which charges a second heat storage material having a phase transition temperature different from the first heat storage material.

26. The heat exchanger according to claim 25,
wherein the heat exchanger is a heat exchanger serving as an evaporator and a heater used in a heat pump cycle,
wherein the first heat storage material is a heat storage material of which the phase transition occurs at a temperature higher than a temperature range in which the heat exchanger is controlled as the evaporator, and
wherein the second heat storage material is a heat storage material of which the phase transition occurs at a temperature lower than a temperature range in which the heat exchanger is controlled as the heater.

27. The heat exchanger according to claim 25 or 26,
wherein the tubes include at least one of a first tube which includes a charging portion provided at one end portion and the other end portion so as to communicate with the storage portion and to communicate with both adjacent laminated tubes, a second tube which includes a charging portion provided at any one of one end portion and the other end portion so as to communicate with the storage portion and to communicate with both adjacent laminated tubes and includes a communication portion provided at an end portion opposite to the end portion having the charging portion so as not to communicate with the storage portion and to communicate with both adjacent laminated tubes, and a third tube which includes a first closing portion provided at one end portion and the other end portion so as to communicate with the storage portion and not to communicate with only one of both adjacent laminated tubes.

28. The heat exchanger according to claim 27,
wherein the tubes include the first tube and the third tube.

29. The heat exchanger according to claim 27,
wherein the tubes include the first tube, the second tube, and the third tube.

30. The heat exchanger according to claim 27,
wherein the tubes are the second tube.

31. The heat exchanger according to any one of claims 27 to 30,
wherein the tubes further include at least one of a fourth tube which includes a communication portion provided at one end portion and the other end portion so as not to communicate with the storage portion and to communicate with both adjacent laminated tubes and in which the storage portion becomes a hermetic space so that the heat storage material is not charged therein or the storage portion is not provided, and a fifth tube which includes a second closing portion provided at one end portion and the other end portion so as not to communicate with the storage portion and not to communicate with only one of both adjacent laminated tubes and in which the storage portion becomes a hermetic space so that the heat storage material is not charged therein or the storage portion is not provided.

32. The heat exchanger according to claim 31,
wherein the tubes include the first tube, the second tube, and the fifth tube.

33. The heat exchanger according to claim 31,
wherein the tubes include the second tube and the fourth tube.

34. The heat exchanger according to claim 31,
wherein the tubes include the first tube, the fourth tube, and the fifth tube.

35. The heat exchanger according to claim 31,
wherein the tubes include the first tube, the third tube, and the fourth tube.

36. The heat exchanger according to claim 31,
wherein the tubes include the second tube, the fourth tube, and the fifth tube.
